# EUROPEAN PATENT APPLICATION

(11) **EP 4 521 794 A1**
(43) Date of publication of application: **12.03.2025**
(21) Application number: 23830312.7
(22) Date of filing: 28.06.2023
(51) Int. Cl.: H04W 12/03

(54) **COMMUNICATION METHOD, COMMUNICATION SYSTEM, AND ELECTRONIC DEVICE**

(30) Priority: 30.06.2022 CN 202210761381
(71) Applicant: Huawei Technologies Co., Ltd., Shenzhen, Guangdong 518129 (CN)
(72) Inventor: WANG, Chunfeng, Shenzhen, Guangdong 518129 (CN); WEI, Xinghai, Shenzhen, Guangdong 518129 (CN)
(74) Representative: MERH-IP Matias Erny Reichl Hoffmann Patentanwälte PartG mbB
(86) International application number: PCT/CN2023/103093
(87) International publication number: WO 2024/002137

(57) **Abstract**

Embodiments of this application provide a communication method, a communication system, and an electronic device, and relate to the field of electronic technologies. In the communication method provided in embodiments of this application, a first electronic device that is not connected to a secondary device can be connected to a secondary device of a second electronic device through information exchange. The secondary device may be an electronic device like a Bluetooth headset, a stylus, a wireless keyboard, or a wireless mouse. A user may perform an operation on the first electronic device or the second electronic device. In the communication method provided in embodiments of this application, a capability of a secondary device being transferred between different devices in a multi-user scenario and/or a multi-device scenario can be greatly improved, to improve user experience.

## Description

This application claims priority to Chinese Patent Application No. 202210761381.X, filed with the China National Intellectual Property Administration on June 30, 2022 and entitled "COMMUNICATION METHOD, COMMUNICATION SYSTEM, AND ELECTRONIC DEVICE", which is incorporated herein by reference in its entirety.

### TECHNICAL FIELD

This application relates to the field of electronic technologies, and in particular, to a communication method, a communication system, and an electronic device.

### BACKGROUND

With development of electronic technologies and maturity of near field wireless communication technologies, an increasing quantity of consumers start to use wireless devices, such as a Bluetooth headset, a wireless keyboard and mouse, and other devices.

When an electronic device is to connect to another wireless device through a near field wireless communication technology, the another wireless device to which the electronic device is to connect needs to be in a discoverable state or a connectable state, so that a connection can be established.

For example, for a Bluetooth headset, steps of establishing a connection between an electronic device and the Bluetooth headset may include the following two steps: In a first step, a user needs to first disconnect the Bluetooth headset from another device, and in some cases, further needs to press and hold a function button of the Bluetooth headset to switch a status of the Bluetooth headset to a connectable state. In a second step, in response to an operation performed by the user, the electronic device searches for a nearby Bluetooth device, and then connects to the Bluetooth device and performs pairing.

Clearly, to connect an electronic device to a wireless device that has connected to another electronic device, a user needs to perform operations on a plurality of electronic devices. Operation steps are complex, and therefore user experience is poor.

### SUMMARY

Embodiments of this application provide a communication method, a communication system, and an electronic device, and relate to the field of electronic technologies. In the communication method provided in embodiments of this application, an electronic device that has not connected to a secondary device can connect to a secondary device of another electronic device through information exchange, and a user does not need to perform a complex operation. This improves user experience.

According to a first aspect, an embodiment of this application provides a communication method, applied to a communication system including a first electronic device and a second electronic device. The method includes: The second electronic device connects to a secondary device, and when the second electronic device determines to establish a connection between the first electronic device and the secondary device, the second electronic device sends a first message to the first electronic device, and the second electronic device sends a first indication to the secondary device, where the first indication is used to indicate the secondary device to enter a connectable state, the first message is used to indicate the first electronic device to connect to the secondary device, and the first message includes information for connecting to the secondary device. The first electronic device connects to the secondary device based on the first message.

In the foregoing embodiment, the first electronic device may connect to the secondary device based on the first message, and a user does not need to manually configure the secondary device to be in the connectable state. This facilitates use by the user.

With reference to some embodiments of the first aspect, in some embodiments, the method further includes: Responding to that an operation performed by a user on the second electronic device is received, the second electronic device determines to establish a connection between the first electronic device and the secondary device.

In the foregoing embodiment, if the user of the second electronic device wants to actively share the secondary device to a user of the first electronic device, the user of the second electronic device may perform an operation on an interface, to trigger the second electronic device to determine to establish a connection between the first electronic device and the secondary device.

With reference to some embodiments of the first aspect, in some embodiments, after the responding to that an operation performed by a user on the second electronic device is received, the method further includes: The second electronic device sends a first request to the first electronic device, where the first request is used to share the secondary device to the first electronic device. The first electronic device sends an acknowledgement message to the second electronic device after the first electronic device receives the first request. After the second electronic device receives the acknowledgement message, the second electronic device determines to establish a connection between the first electronic device and the secondary device.

In the foregoing embodiment, after determining, through interaction with the user, to actively share the secondary device, the second electronic device interacts with the first electronic device to notify the first electronic device that the secondary device is to be shared to the first electronic device; and after receiving the acknowledgement message from the first electronic device, the second electronic device determines to establish a connection between the first electronic device and the secondary device.

With reference to some embodiments of the first aspect, in some embodiments, the method further includes: The first electronic device sends a second request to the second electronic device. After the second electronic device receives the second request, the second electronic device determines to establish a connection between the first electronic device and the secondary device.

In the foregoing embodiment, the first electronic device may alternatively actively initiate a request, where the request is used to enable the second electronic device to determine to establish a connection between the first electronic device and the secondary device.

With reference to some embodiments of the first aspect, in some embodiments, before the first electronic device sends the second request to the second electronic device, the method further includes: The first electronic device displays a first interface, where the first interface includes a first control. The first electronic device displays a first window after receiving an operation performed by a user on the first control, where the first window includes a second control, and the second control corresponds to the second electronic device. That the first electronic device sends a second request to the second electronic device specifically includes: The first electronic device sends the second request to the second electronic device after receiving an operation performed by the user on the second control.

In the foregoing embodiment, the user may perform an interface operation on the first electronic device, so that the first electronic device sends the second request to the second electronic device. The interface may be an interface of a music application, an interface of a setting center, or the like.

With reference to some embodiments of the first aspect, in some embodiments, before the second electronic device determines to establish a connection between the first electronic device and the secondary device, the method further includes: The second request includes a type of the secondary device, and the second electronic device determines the secondary device according to the second request. After the first electronic device connects to the secondary device based on the first message, the method further includes: The first electronic device uses the secondary device as an input device or an output device.

In the foregoing embodiment, the second request may further include the type of the secondary device, so that the second electronic device can determine, from a plurality of secondary devices, a secondary device needed by the first electronic device.

With reference to some embodiments of the first aspect, in some embodiments, before the second electronic device determines to establish a connection between the first electronic device and the secondary device, the method further includes: The second request is used to share first data, and the second electronic device determines the secondary device after the second electronic device determines, based on the first data, that the secondary device is to process the first data. After the first electronic device connects to the secondary device based on the first message, the method further includes: The first electronic device sends the first data to the secondary device.

In the foregoing embodiment, the second request may alternatively be a service type request, a data sharing request, or the like, so that the second electronic device can determine, from a plurality of secondary devices, a secondary device needed by the first electronic device.

With reference to some embodiments of the first aspect, in some embodiments, the first interface is an interface of a first application, the first application is an application for playing a multimedia file, the first data is a multimedia file, the first interface further includes a third control, and the third control is used to play the first data. After the first electronic device connects to the secondary device based on the first message, the method further includes: The first electronic device plays a picture and/or audio of the multimedia file through the secondary device after receiving an operation performed by the user on the third control.

In the foregoing embodiment, the user may click/tap some controls on a music application interface on the first electronic device to connect to the secondary device of the second electronic device, and then click/tap Play to enable the secondary device to play music, to achieve an objective of quickly sharing audio.

With reference to some embodiments of the first aspect, in some embodiments, before the first electronic device sends the first request to the second electronic device, the method further includes: The first electronic device determines a first distance, where the first distance is a distance between the first electronic device and the second electronic device. The first electronic device establishes a connection to the second electronic device after the first electronic device determines that the first distance is less than a distance threshold. That the first electronic device sends a first request to the second electronic device specifically includes: The first electronic device sends the first request to the second electronic device through the connection. That the second electronic device sends a first message to the first electronic device specifically includes: The second electronic device sends the first message to the first electronic device through the connection.

In the foregoing embodiment, in a process in which the first electronic device connects to the secondary device, the first electronic device may establish a connection to the second electronic device, to avoid leakage of the information for connecting to the secondary device, and ensure information security for the secondary device.

With reference to some embodiments of the first aspect, in some embodiments, that the first electronic device determines a first distance specifically includes: The second electronic device sends a first advertising message. The first electronic device determines the first distance based on the first advertising message after receiving the first advertising message.

In the foregoing embodiment, the first electronic device may perform active ranging.

With reference to some embodiments of the first aspect, in some embodiments, that the first electronic device determines a first distance specifically includes: The first electronic device sends a first advertising message. The second electronic device sends a first response after receiving the first advertising message and determining a first distance based on the first advertising message, where the first response includes the first distance. The first electronic device determines the first distance based on the first response after receiving the first response.

In the foregoing embodiment, the first electronic device may perform passive ranging.

With reference to some embodiments of the first aspect, in some embodiments, before the first electronic device establishes the connection to the second electronic device, the method further includes: The second electronic device sends a first verification parameter through advertising, where the first verification parameter is a hash value of a first parameter, the first parameter is a first MAC and/or a first public key, the first public key is a public key of the second electronic device, and the first MAC is an address of the second electronic device. After the first electronic device establishes the connection to the second electronic device, the method further includes: The second electronic device sends the first parameter through the connection. The first electronic device determines, based on the first parameter and the first verification parameter, whether to break the connection.

In the foregoing embodiment, security verification may be further performed between the first electronic device and the second electronic device, to avoid leakage of information about the secondary device after an error occurs in a connection between devices.

With reference to some embodiments of the first aspect, in some embodiments, after the second electronic device receives the second request, and before the second electronic device sends the first indication to the secondary device, the method further includes: The second electronic device displays a second interface, where the second interface includes a second window and a fourth control, the second window is used to display authorization prompt information, the authorization prompt information is used to prompt the user whether to authorize the first electronic device to establish a connection to the second secondary device, and the fourth control is used to obtain user authorization. That the second electronic device sends a first indication to the second secondary device specifically includes: The second electronic device sends the first indication to the second secondary device after receiving an operation performed by the user on the fourth control.

In the foregoing embodiment, the first electronic device can obtain the information for connecting to the secondary device only after the user performs confirmation on the second electronic device, to avoid leakage of the information about the secondary device.

With reference to some embodiments of the first aspect, in some embodiments, after the second electronic device receives the second request, and before the second electronic device sends the first message to the first electronic device, the method further includes: The second electronic device sends a third message to the secondary device, where the third message is used to verify whether an electronic device connected to the secondary device is the first electronic device, the third message includes a second MAC, and the second MAC is an address of the first electronic device. After the first electronic device connects to the secondary device, the method further includes: The secondary device determines, based on the third message, that the electronic device connected to the secondary device is the first electronic device.

In the foregoing embodiment, security verification may also be performed between the secondary device and the first electronic device.

With reference to some embodiments of the first aspect, in some embodiments, after the second electronic device sends the first indication to the secondary device, and before the first electronic device connects to the secondary device based on the first message, the method further includes: The second electronic device sends a fourth message to the first electronic device, where the fourth message is used to determine whether an electronic device connected based on the first message is the secondary device, and the fourth message includes one or more of a public key of the secondary device, identification information of the secondary device, and an identifier of a connection between the secondary device and the second electronic device. After the first electronic device connects to the secondary device based on the first message, the method further includes: The first electronic device determines, based on the fourth message, that an electronic device connected to the first electronic device is the secondary device.

In the foregoing embodiment, security verification may also be performed between the secondary device and the first electronic device.

With reference to some embodiments of the first aspect, in some embodiments, the first request or the first message includes first duration, and after the first electronic device connects to the secondary device, the method further includes: After the first electronic device is connected to the secondary device for the first duration, the first electronic device breaks the connection between the first electronic device and the secondary device.

In the foregoing embodiment, the first electronic device is disconnected after being used for a period of time, so that the secondary device can connect to the second electronic device again. The user of the second electronic device or the user of the first electronic device does not need to perform a complex operation.

With reference to some embodiments of the first aspect, in some embodiments, after the first electronic device is connected to the secondary device for the first duration, the method further includes: The first electronic device invalidates or deletes the information for connecting to the secondary device.

In the foregoing embodiment, after the first electronic device is disconnected from the secondary device, the first electronic device invalidates or deletes the information about the secondary device, to prevent the first electronic device from subsequently connecting to the secondary device by mistake.

With reference to some embodiments of the first aspect, in some embodiments, the first request is used to share first data, the first data is a multimedia file, and the first duration is related to play duration of the multimedia file.

In the foregoing embodiment, the first duration may be related to duration of the multimedia file, for example, music, so that the first electronic device can be automatically disconnected after the music is played.

With reference to some embodiments of the first aspect, in some embodiments, an electronic device in a connectable state is capable of being connected and being paired.

In the foregoing embodiment, the secondary device may be further paired with the first electronic device, to further ensure security of information exchange between the secondary device and the first electronic device.

With reference to some embodiments of the first aspect, in some embodiments, the method further includes: The first electronic device sends a second request to the second electronic device. After the second electronic device receives the second request, the second electronic device determines the secondary device according to the second request. After the second electronic device determines the secondary device, the second electronic device determines to establish a connection between the first electronic device and the secondary device.

In the foregoing embodiment, the first electronic device may alternatively actively initiate a request, where the request is used to enable the second electronic device to determine to establish a connection between the first electronic device and the secondary device, and the request is received by the second electronic device.

With reference to some embodiments of the first aspect, in some embodiments, the second request includes a type of the secondary device and/or that the second request is used to share first data, and after the first electronic device connects to the secondary device based on the first message, the method further includes: The first electronic device uses the secondary device as an input device or an output device.

In the foregoing embodiment, the second request may further include the type of the secondary device and/or information indicating a type of data to be shared by the second request, so that the second electronic device can determine, from a plurality of secondary devices, a secondary device needed by the first electronic device.

With reference to some embodiments of the first aspect, in some embodiments, the second request is used to share the first data, and that the second electronic device determines the secondary device according to the second request specifically includes: The second electronic device determines the secondary device after the second electronic device determines, based on the first data, that the secondary device is to process the first data. After the first electronic device uses the secondary device as an input device or an output device, the method further includes: The first electronic device sends the first data to the secondary device.

In the foregoing embodiment, the second request may alternatively be a data sharing request or the like, so that the second electronic device can determine, from a plurality of secondary devices, a secondary device needed by the first electronic device. Then the first electronic device may directly send data to the secondary device.

With reference to some embodiments of the first aspect, in some embodiments, the first interface is an interface of a first application, the first application is an application for playing a multimedia file, the first interface further includes a third control, and the third control is used to indicate the first electronic device to play the multimedia file. After the first electronic device connects to the secondary device based on the first message, the method further includes: The first electronic device plays a picture and/or audio of the multimedia file through the secondary device after receiving an operation performed by the user on the third control.

In the foregoing embodiment, the user may click/tap some controls on a music application interface on the first electronic device to connect to the secondary device of the second electronic device, and then click/tap Play to enable the secondary device to play music, to achieve an objective of quickly sharing audio.

With reference to some embodiments of the first aspect, in some embodiments, the second request includes a type of the secondary device and/or that the second request is used to share first data, and after the first electronic device connects to the secondary device based on the first message, the method further includes: The first electronic device uses the secondary device as an input device or an output device, and the first electronic device sends the first data to the secondary device.

In the foregoing embodiment, the second electronic device may determine, from a plurality of secondary devices based on the type of the secondary device, a secondary device needed by the first electronic device, and then share the secondary device to the first electronic device. The first electronic device sends the first data to the secondary device. Alternatively, the second request sent by the first electronic device may include only a device type. Then the second electronic device determines, based on the device type, a secondary device needed by the first electronic device. Then the first electronic device sends the first data to the secondary device after the first electronic device connects to the secondary device. Alternatively, the second request sent by the first electronic device is a request for sharing specific data, and carries information for determining a secondary device. The second electronic device may determine, based on the information for determining a secondary device, a secondary device needed by the first electronic device. Then the first electronic device may share the data through the secondary device after the first electronic device connects to the secondary device.

According to a second aspect, an embodiment of this application provides a communication method, applied to a first electronic device. The method includes: The first electronic device receives a first message sent by a second electronic device, where the first message is used to connect to a secondary device, the first message includes information for connecting to the secondary device, the secondary device is connected to the second electronic device before the first electronic device receives the first message, and the secondary device is in a connectable state after the first electronic device receives the first message. The first electronic device connects to the secondary device based on the first message.

In the foregoing embodiment, the first electronic device may connect to the secondary device based on the first message, and a user does not need to manually configure the secondary device to be in the connectable state. This facilitates use by the user.

With reference to some embodiments of the second aspect, in some embodiments, before the first electronic device receives the first message sent by the second electronic device, the method further includes: The first electronic device receives a first request sent by the second electronic device, where the first request is used to share the secondary device to the first electronic device. The first electronic device sends an acknowledgement message to the second electronic device, where the acknowledgement message is used to indicate the second electronic device to determine to establish a connection between the first electronic device and the secondary device.

In the foregoing embodiment, after determining, through interaction with the user, to actively share the secondary device, the second electronic device interacts with the first electronic device to notify the first electronic device that the secondary device is to be shared to the first electronic device; and after receiving the acknowledgement message from the first electronic device, the second electronic device determines to establish a connection between the first electronic device and the secondary device.

With reference to some embodiments of the second aspect, in some embodiments, before the first electronic device sends the first request to the second electronic device, the method further includes: The first electronic device displays a first interface, where the first interface includes a first control. The first electronic device displays a first window after receiving an operation performed by a user on the first control, where the first window includes a second control, and the second control corresponds to the second electronic device. That the first electronic device sends the first request to the second electronic device specifically includes: The first electronic device sends the second request to the second electronic device after receiving an operation performed by the user on the second control.

In the foregoing embodiment, the user may perform an interface operation on the first electronic device, so that the first electronic device sends the second request to the second electronic device. The interface may be an interface of a music application, an interface of a setting center, or the like.

With reference to some embodiments of the second aspect, in some embodiments, after the first electronic device connects to the secondary device based on the first message, the method further includes: The second request includes a type of the secondary device, and the first electronic device uses the secondary device as an input device or an output device.

In the foregoing embodiment, the second request may further include the type of the secondary device, so that the second electronic device can determine, from a plurality of secondary devices, a secondary device needed by the first electronic device.

With reference to some embodiments of the second aspect, in some embodiments, after the first electronic device connects to the secondary device based on the first message, the method further includes: The second request is used to share first data to the second electronic device, and the first electronic device sends the first data to the secondary device.

In the foregoing embodiment, the second request may alternatively be a service type request, a data sharing request, or the like, so that the second electronic device can determine, from a plurality of secondary devices, a secondary device needed by the first electronic device.

With reference to some embodiments of the second aspect, in some embodiments, the first interface is an interface of a first application, the first application is an application for playing a multimedia file, the first data is a multimedia file, the first interface further includes a third control, and the third control is used to play the first data. After the first electronic device connects to the secondary device, the method further includes: The first electronic device plays a picture and/or audio of the multimedia file through the secondary device after receiving an operation performed by the user on the third control.

In the foregoing embodiment, the user may click/tap some controls on a music application interface on the first electronic device to connect to the secondary device of the second electronic device, and then click/tap Play to enable the secondary device to play music, to achieve an objective of quickly sharing audio.

With reference to some embodiments of the second aspect, in some embodiments, before the first electronic device sends the second request to the second electronic device, the method further includes: The first electronic device determines a first distance, where the first distance is a distance between the first electronic device and the second electronic device. The first electronic device establishes a connection to the second electronic device after the first electronic device determines that the first distance is less than a distance threshold. That the first electronic device sends a second request to the second electronic device specifically includes: The first electronic device sends the second request to the second electronic device through the connection. That the first electronic device receives a first message sent by a second electronic device specifically includes: The first electronic device receives, through the connection, the first message sent by the second electronic device.

In the foregoing embodiment, in a process in which the first electronic device connects to the secondary device, the first electronic device may establish a connection to the second electronic device, to avoid leakage of the information for connecting to the secondary device, and ensure information security for the secondary device. The second electronic device needs to be sufficiently close to the first electronic device, to avoid leakage of the information for connecting to the secondary device that is caused by misconnection to another electronic device.

With reference to some embodiments of the second aspect, in some embodiments, that the first electronic device determines a first distance specifically includes: The first electronic device receives a first advertising message sent by the second electronic device, and determines the first distance based on the first advertising message. Alternatively, the first electronic device sends a first advertising message, and receives a first response sent by the second electronic device, where the first response includes a first distance, and the first distance is determined by the second electronic device based on the first advertising message.

In the foregoing embodiment, the first electronic device may perform passive ranging.

With reference to some embodiments of the second aspect, in some embodiments, before the first electronic device establishes the connection to the second electronic device, the method further includes: The second electronic device sends a first verification parameter through advertising, where the first verification parameter is a hash value of a first parameter, the first parameter is a first MAC and/or a first public key, the first public key is a public key of the second electronic device, and the first MAC is an address of the second electronic device. After the first electronic device establishes the connection to the second electronic device, the method further includes: The first electronic device receives the first parameter through the connection. The first electronic device determines, based on the first parameter and the first verification parameter, whether to break the connection.

**In** the foregoing embodiment, security verification may be further performed between the first electronic device and the second electronic device, to avoid leakage of information about the secondary device after an error occurs in a connection between devices.

With reference to some embodiments of the second aspect, in some embodiments, before the first electronic device connects to the secondary device based on the first message, the method further includes: The first electronic device receives a second message sent by the second electronic device, where the second message is used to determine whether an electronic device connected based on the first message is the secondary device, and the second message includes one or more of a public key of the secondary device, identification information of the secondary device, and an identifier of a connection between the secondary device and the second electronic device. After the first electronic device connects to the secondary device based on the first message, the method further includes: The first electronic device determines, based on the second message, that an electronic device connected to the first electronic device is the secondary device.

**In** the foregoing embodiment, security verification may also be performed between the secondary device and the first electronic device.

With reference to some embodiments of the second aspect, in some embodiments, the first request or the first message includes first duration, and after the first electronic device connects to the secondary device based on the first message, the method further includes: After the first electronic device is connected to the secondary device for the first duration, the first electronic device breaks the connection between the first electronic device and the secondary device.

**In** the foregoing embodiment, the first electronic device is disconnected after being used for a period of time, so that the secondary device can connect to the second electronic device again. The user of the second electronic device or the user of the first electronic device does not need to perform a complex operation.

With reference to some embodiments of the second aspect, in some embodiments, after the first electronic device is connected to the secondary device for the first duration, the method further includes: The first electronic device invalidates or deletes the information for connecting to the secondary device.

In the foregoing embodiment, after the first electronic device is disconnected from the secondary device, the first electronic device invalidates or deletes the information about the secondary device, to prevent the first electronic device from subsequently connecting to the secondary device by mistake.

With reference to some embodiments of the second aspect, in some embodiments, the first request is used to share first data, the first data is a multimedia file, and the first duration is related to play duration of the multimedia file.

In the foregoing embodiment, the first duration may be related to duration of the multimedia file, for example, music, so that the first electronic device can be automatically disconnected after the music is played.

With reference to some embodiments of the second aspect, in some embodiments, the second request includes a type of the secondary device and/or that the second request is used to share first data, and after the first electronic device connects to the secondary device based on the first message, the method further includes: The first electronic device uses the secondary device as an input device or an output device. When the second request is used to share the first data, the first electronic device sends the first data to the secondary device after the first electronic device uses the secondary device as an input device or an output device.

In the foregoing embodiment, the first electronic device may further notify, by using a plurality of parameters, the second electronic device of a secondary device needed by the first electronic device, and use the secondary device as an input device or an output device after the first electronic device connects to the secondary device.

According to a third aspect, an embodiment of this application provides a communication method, applied to a second electronic device. The method includes: The second electronic device connects to a secondary device, and when the second electronic device determines to establish a connection between a first electronic device and the secondary device, the second electronic device sends a first message to the first electronic device, and the second electronic device sends a first indication to the secondary device, where the first indication is used to indicate the secondary device to enter a connectable state, the first message is used to indicate the first electronic device to connect to the secondary device, and the first message includes information for connecting to the secondary device.

In the foregoing embodiment, when the second electronic device determines to establish a connection between the first electronic device and the secondary device, the second electronic device sends the first indication to the secondary device to enable the secondary device to change to the connectable state, and the second electronic device sends the first message to the first electronic device, to indicate the first electronic device to connect to the secondary device based on the first message.

With reference to some embodiments of the third aspect, in some embodiments, responding to that an operation performed by a user on the second electronic device is received, the second electronic device determines to establish a connection between the first electronic device and the secondary device.

In the foregoing embodiment,
With reference to some embodiments of the third aspect, in some embodiments, after the responding to that an operation performed by a user on the second electronic device is received, the method further includes: The second electronic device sends a first request to the first electronic device, where the first request is used to share the secondary device to the first electronic device. After the second electronic device receives the acknowledgement message sent by the first electronic device, the second electronic device determines to establish a connection between the first electronic device and the secondary device.

In the foregoing embodiment, if the user of the second electronic device wants to actively share the secondary device to a user of the first electronic device, the user of the second electronic device may perform an operation on an interface, to trigger the second electronic device to determine to establish a connection between the first electronic device and the secondary device.

With reference to some embodiments of the third aspect, in some embodiments, after the responding to that an operation performed by a user on the second electronic device is received, the method further includes: The second electronic device sends a first request to the first electronic device, where the first request is used to share the secondary device to the first electronic device. After the second electronic device receives the acknowledgement message sent by the first electronic device, the second electronic device determines to establish a connection between the first electronic device and the secondary device.

In the foregoing embodiment, after determining, through interaction with the user, to actively share the secondary device, the second electronic device interacts with the first electronic device to notify the first electronic device that the secondary device is to be shared to the first electronic device; and after receiving the acknowledgement message from the first electronic device, the second electronic device determines to establish a connection between the first electronic device and the secondary device.

With reference to some embodiments of the third aspect, in some embodiments, the method further includes: The second electronic device receives a second request sent by the first electronic device. After the second electronic device receives the second request, the second electronic device determines to establish a connection between the first electronic device and the secondary device.

In the foregoing embodiment, the first electronic device may alternatively actively initiate a request, where the request is used to enable the second electronic device to determine to establish a connection between the first electronic device and the secondary device.

With reference to some embodiments of the third aspect, in some embodiments, the method further includes: The second request is used to share first data, and the second electronic device determines the secondary device after the second electronic device determines, based on the first data, that the secondary device is to process the first data.

In the foregoing embodiment, the second request may alternatively be a service type request, a data sharing request, or the like, so that the second electronic device can determine, from a plurality of secondary devices, a secondary device needed by the first electronic device.

With reference to some embodiments of the third aspect, in some embodiments, the method further includes: The second request includes a type of the secondary device, and the second electronic device determines the secondary device according to the second request.

In the foregoing embodiment, the second request may further include the type of the secondary device, so that the second electronic device can determine, from a plurality of secondary devices, a secondary device needed by the first electronic device.

With reference to some embodiments of the third aspect, in some embodiments, before the second electronic device receives the second request sent by the first electronic device, the method further includes: The second electronic device establishes a connection to the first electronic device. Before the second electronic device establishes the connection to the first electronic device, the method further includes: The second electronic device sends a first verification parameter through advertising, where the first verification parameter is a hash value of a first parameter, the first parameter is a first MAC and/or a first public key, the first public key is a public key of the second electronic device, and the first MAC is an address of the second electronic device. After the second electronic device establishes the connection to the first electronic device, the method further includes: The second electronic device sends the first parameter through the connection. That the second electronic device receives a second request sent by the first electronic device specifically includes: The second electronic device receives, through the connection, the second request sent by the first electronic device. That the second electronic device sends a first message to the first electronic device specifically includes: The second electronic device sends the first message to the first electronic device through the connection.

In the foregoing embodiment, the second electronic device establishes the connection to the first electronic device, and performs security verification, to ensure that information about the secondary device is not leaked.

With reference to some embodiments of the third aspect, in some embodiments, after the second electronic device receives the second request, and before the second electronic device sends the first indication to the secondary device, the method further includes: The second electronic device displays a first interface, where the first interface includes a first window and a first control, the first window is used to display authorization prompt information, the authorization prompt information is used to prompt the user whether to authorize the first electronic device to establish a connection to the secondary device, and the first control is used to obtain user authorization. That the second electronic device sends a first indication to the secondary device specifically includes: The second electronic device sends the first indication to the secondary device after receiving an operation performed by the user on the first control.

In the foregoing embodiment, because connection information of the secondary device relates to user privacy, the second electronic device sends the first message to the first electronic device and sends the first indication to the secondary device only after user authorization is obtained.

With reference to some embodiments of the third aspect, in some embodiments, after the second electronic device receives the second request sent by the first electronic device, and before the second electronic device sends the first message to the first electronic device, the method further includes: The second electronic device sends a third message to the secondary device, where the third message is used to verify whether an electronic device connected to the secondary device is the first electronic device, the third message includes a second MAC, and the second MAC is an address of the first electronic device.

In the foregoing embodiment, the second electronic device sends verification information to the secondary device, to provide a solid data basis for security verification between the secondary device and the first electronic device.

With reference to some embodiments of the third aspect, in some embodiments, after the second electronic device sends the first indication to the secondary device, the method further includes: The second electronic device sends a fourth message to the first electronic device, where the fourth message is used to determine whether an electronic device connected based on the first message is the secondary device, and the fourth message includes one or more of a public key of the secondary device, identification information of the secondary device, and an identifier of a connection between the secondary device and the second electronic device.

In the foregoing embodiment, the second electronic device sends verification information to the first electronic device, to provide a solid data basis for security verification between the secondary device and the first electronic device.

With reference to some embodiments of the third aspect, in some embodiments, the method further includes: After the second electronic device receives the second request, the second electronic device determines the secondary device according to the second request. After the second electronic device determines the secondary device, the second electronic device determines to establish a connection between the first electronic device and the secondary device.

In the foregoing embodiment, the second electronic device may determine, based on a message sent by the first electronic device, a specific secondary device needed by the first electronic device.

With reference to some embodiments of the third aspect, in some embodiments, the second request includes a type of the secondary device and/or that the second request is used to share first data, and that the second electronic device determines the secondary device according to the second request specifically includes: determining the secondary device based on the type of the secondary device and the first data. The second electronic device determines the secondary device after the second electronic device determines, based on the first data, that the secondary device is to process the first data.

In the foregoing embodiment, the second electronic device may determine the secondary device by using different methods according to different second requests. In different scenarios, different formats may be selected for the second request.

According to a fourth aspect, an embodiment of this application provides a communication method, applied to a secondary device. The method includes: The secondary device connects to a second electronic device, and the secondary device receives, through a connection between the secondary device and the second electronic device, a first indication sent by the second electronic device, where the first indication is used to indicate the secondary device to change to a connectable state. The secondary device changes to the connectable state based on the first indication. After the secondary device changes to the connectable state, in response to that a connection request sent by a first electronic device is received, the secondary device establishes a connection to the first electronic device.

In the foregoing embodiment, the secondary device first connects to the second electronic device, and then receives the first indication sent by the second electronic device and changes to the connectable state, to provide a data basis for a connection to the first electronic device.

With reference to some embodiments of the fourth aspect, in some embodiments, before the secondary device establishes the connection to the first electronic device, the method further includes: The secondary device receives, through the connection between the second electronic device and the secondary device, a first message sent by the second electronic device, where the first message is used to verify whether an electronic device connected to the secondary device is the first electronic device. After the secondary device establishes the connection to the first electronic device, the method further includes: The secondary device determines, based on the first message, that the electronic device connected to the secondary device is the first electronic device.

In the foregoing embodiment, the secondary device may perform security verification with the first electronic device, to prevent the secondary device from being connected to another electronic device.

With reference to some embodiments of the fourth aspect, in some embodiments, the first message includes a first MAC, and the first MAC is an address of the first electronic device.

In the foregoing embodiment, a message for performing security verification may be the address of the first electronic device.

According to a fifth aspect, an embodiment of this application provides a first electronic device. The first electronic device includes one or more processors and a memory. The memory is coupled to the one or more processors. The memory is configured to store computer program code. The computer program code includes computer instructions. The one or more processors invoke the computer instructions to enable the first electronic device to perform the following operations: The first electronic device receives a first message sent by a second electronic device, where the first message is used to connect to a secondary device, the first message includes information for connecting to the secondary device, the secondary device is connected to the second electronic device before the first electronic device receives the first message, and the secondary device is in a connectable state after the first electronic device receives the first message. The first electronic device connects to the secondary device based on the first message.

With reference to some embodiments of the fifth aspect, in some embodiments, the one or more processors are further configured to invoke the computer instructions to enable the first electronic device to perform the following operations: The first electronic device receives a first request sent by the second electronic device, where the first request is used to share the secondary device to the first electronic device. The first electronic device sends an acknowledgement message to the second electronic device, where the acknowledgement message is used to indicate the second electronic device to determine to establish a connection between the first electronic device and the secondary device.

With reference to some embodiments of the fifth aspect, in some embodiments, the one or more processors are specifically configured to invoke the computer instructions to enable the first electronic device to perform the following operation: The first electronic device sends a second request to the second electronic device, where the second request is used to indicate the second electronic device to determine to establish a connection between the first electronic device and the secondary device.

With reference to some embodiments of the fifth aspect, in some embodiments, the one or more processors are further configured to invoke the computer instructions to enable the first electronic device to perform the following operations: The first electronic device displays a first interface, where the first interface includes a first control. The first electronic device displays a first window after receiving an operation performed by a user on the first control, where the first window includes a second control, and the second control corresponds to the second electronic device. That the first electronic device sends a first request to the second electronic device specifically includes: The first electronic device sends the second request to the second electronic device after receiving an operation performed by the user on the second control.

With reference to some embodiments of the fifth aspect, in some embodiments, the one or more processors are further configured to invoke the computer instructions to enable the first electronic device to perform the following operation: The second request includes a type of the secondary device, and the first electronic device uses the secondary device as an input device or an output device.

With reference to some embodiments of the fifth aspect, in some embodiments, the one or more processors are further configured to invoke the computer instructions to enable the first electronic device to perform the following operation: The second request is used to share first data to the second electronic device, and the first electronic device sends the first data to the secondary device.

With reference to some embodiments of the fifth aspect, in some embodiments, the one or more processors are further configured to invoke the computer instructions to enable the first electronic device to perform the following operation: The first electronic device plays a picture and/or audio of the multimedia file through the secondary device after receiving an operation performed by the user on the third control, where the first interface is an interface of a first application, the first application is an application for playing a multimedia file, the first data is a multimedia file, the first interface further includes a third control, and the third control is used to play the first data.

With reference to some embodiments of the fifth aspect, in some embodiments, the one or more processors are further configured to invoke the computer instructions to enable the first electronic device to perform the following operations: The first electronic device determines a first distance, where the first distance is a distance between the first electronic device and the second electronic device. The first electronic device establishes a connection to the second electronic device after the first electronic device determines that the first distance is less than a distance threshold. The one or more processors are specifically configured to invoke the computer instructions to enable the first electronic device to perform the following operations: The first electronic device sends the second request to the second electronic device through the connection. The first electronic device receives, through the connection, the first message sent by the second electronic device.

With reference to some embodiments of the fifth aspect, in some embodiments, the one or more processors are specifically configured to invoke the computer instructions to enable the first electronic device to perform the following operations: The first electronic device receives a first advertising message sent by the second electronic device, and determines the first distance based on the first advertising message. Alternatively, the first electronic device sends a first advertising message, and receives a first response sent by the second electronic device, where the first response includes a first distance, and the first distance is determined by the second electronic device based on the first advertising message.

With reference to some embodiments of the fifth aspect, in some embodiments, the one or more processors are further configured to invoke the computer instructions to enable the first electronic device to perform the following operations: Before the first electronic device establishes the connection to the second electronic device, the method further includes: The second electronic device sends a first verification parameter through advertising, where the first verification parameter is a hash value of a first parameter, the first parameter is a first MAC and/or a first public key, the first public key is a public key of the second electronic device, and the first MAC is an address of the second electronic device. The first electronic device receives the first parameter through the connection. The first electronic device determines, based on the first parameter and the first verification parameter, whether to break the connection.

With reference to some embodiments of the fifth aspect, in some embodiments, the one or more processors are further configured to invoke the computer instructions to enable the first electronic device to perform the following operations: The first electronic device receives a second message sent by the second electronic device, where the second message is used to determine whether an electronic device connected based on the first message is the secondary device, and the second message includes one or more of a public key of the secondary device, identification information of the secondary device, and an identifier of a connection between the secondary device and the second electronic device. The first electronic device determines, based on the second message, that an electronic device connected to the first electronic device is the secondary device.

With reference to some embodiments of the fifth aspect, in some embodiments, the one or more processors are further configured to invoke the computer instructions to enable the first electronic device to perform the following operation: The first request or the first message includes first duration, and after the first electronic device is connected to the secondary device for the first duration, the first electronic device breaks the connection between the first electronic device and the secondary device.

With reference to some embodiments of the fifth aspect, in some embodiments, the one or more processors are further configured to invoke the computer instructions to enable the first electronic device to perform the following operation: The first electronic device invalidates or deletes the information for connecting to the secondary device.

With reference to some embodiments of the fifth aspect, in some embodiments, the first request is used to share first data, the first data is a multimedia file, and the first duration is related to play duration of the multimedia file.

With reference to some embodiments of the fifth aspect, in some embodiments, the one or more processors are further configured to invoke the computer instructions to enable the first electronic device to perform the following operations: The first electronic device uses the secondary device as an input device or an output device. When the second request is used to share the first data, the first electronic device sends the first data to the secondary device after the first electronic device uses the secondary device as an input device or an output device.

According to a sixth aspect, an embodiment of this application provides a second electronic device. The second electronic device includes one or more processors and a memory. The memory is coupled to the one or more processors. The memory is configured to store computer program code. The computer program code includes computer instructions. The one or more processors invoke the computer instructions to enable the second electronic device to perform the following operations: The second electronic device connects to a secondary device, and when the second electronic device determines to establish a connection between a first electronic device and the secondary device, the second electronic device sends a first message to the first electronic device, and the second electronic device sends a first indication to the secondary device, where the first indication is used to indicate the secondary device to enter a connectable state, the first message is used to indicate the first electronic device to connect to the secondary device, and the first message includes information for connecting to the secondary device.

With reference to some embodiments of the sixth aspect, in some embodiments, the one or more processors are further configured to invoke the computer instructions to enable the second electronic device to perform the following operation: Responding to that an operation performed by a user on the second electronic device is received, the second electronic device determines to establish a connection between the first electronic device and the secondary device.

With reference to some embodiments of the sixth aspect, in some embodiments, the one or more processors are further configured to invoke the computer instructions to enable the second electronic device to perform the following operations: The second electronic device sends a first request to the first electronic device, where the first request is used to share the secondary device to the first electronic device. After the second electronic device receives the acknowledgement message sent by the first electronic device, the second electronic device determines to establish a connection between the first electronic device and the secondary device.

With reference to some embodiments of the sixth aspect, in some embodiments, the one or more processors are further configured to invoke the computer instructions to enable the second electronic device to perform the following operations: The second electronic device receives a second request sent by the first electronic device. After the second electronic device receives the second request, the second electronic device determines to establish a connection between the first electronic device and the secondary device.

With reference to some embodiments of the sixth aspect, in some embodiments, the one or more processors are further configured to invoke the computer instructions to enable the second electronic device to perform the following operation: The second request is used to share first data, and the second electronic device determines the secondary device after the second electronic device determines, based on the first data, that the secondary device is to process the first data.

With reference to some embodiments of the sixth aspect, in some embodiments, the one or more processors are further configured to invoke the computer instructions to enable the second electronic device to perform the following operation: The second request includes a type of the secondary device, and the second electronic device determines the secondary device according to the second request.

With reference to some embodiments of the sixth aspect, in some embodiments, the one or more processors are further configured to invoke the computer instructions to enable the second electronic device to perform the following operations: The second electronic device establishes a connection to the first electronic device. The second electronic device sends a first verification parameter through advertising, where the first verification parameter is a hash value of a first parameter, the first parameter is a first MAC and/or a first public key, the first public key is a public key of the second electronic device, and the first MAC is an address of the second electronic device. The second electronic device sends the first parameter through the connection. The one or more processors are specifically configured to invoke the computer instructions to enable the second electronic device to perform the following operations: The second electronic device receives, through the connection, the second request sent by the first electronic device. The second electronic device sends the first message to the first electronic device through the connection.

With reference to some embodiments of the sixth aspect, in some embodiments, the one or more processors are further configured to invoke the computer instructions to enable the second electronic device to perform the following operation: The second electronic device displays a first interface, where the first interface includes a first window and a first control, the first window is used to display authorization prompt information, the authorization prompt information is used to prompt the user whether to authorize the first electronic device to establish a connection to the secondary device, and the first control is used to obtain user authorization. The one or more processors are specifically configured to invoke the computer instructions to enable the second electronic device to perform the following operation: The second electronic device sends the first indication to the secondary device after receiving an operation performed by the user on the first control.

With reference to some embodiments of the sixth aspect, in some embodiments, the one or more processors are further configured to invoke the computer instructions to enable the second electronic device to perform the following operation: The second electronic device sends a third message to the secondary device, where the third message is used to verify whether an electronic device connected to the secondary device is the first electronic device, the third message includes a second MAC, and the second MAC is an address of the first electronic device.

With reference to some embodiments of the sixth aspect, in some embodiments, the one or more processors are further configured to invoke the computer instructions to enable the second electronic device to perform the following operation: The second electronic device sends a fourth message to the first electronic device, where the fourth message is used to determine whether an electronic device connected based on the first message is the secondary device, and the fourth message includes one or more of a public key of the secondary device, identification information of the secondary device, and an identifier of a connection between the secondary device and the second electronic device.

With reference to some embodiments of the sixth aspect, in some embodiments, the one or more processors are further configured to invoke the computer instructions to enable the second electronic device to perform the following operations: After the second electronic device receives the second request, the second electronic device determines the secondary device according to the second request. After the second electronic device determines the secondary device, the second electronic device determines to establish a connection between the first electronic device and the secondary device.

With reference to some embodiments of the sixth aspect, in some embodiments, the one or more processors are further configured to invoke the computer instructions to enable the second electronic device to perform the following operation: The second electronic device determines the secondary device based on the type of the secondary device and the first data.

According to a seventh aspect, an embodiment of this application provides a secondary device. The secondary device includes one or more processors and a memory. The memory is coupled to the one or more processors. The memory is configured to store computer program code. The computer program code includes computer instructions. The one or more processors invoke the computer instructions to enable the electronic device to perform the following operations: The secondary device connects to a second electronic device, and the secondary device receives, through a connection between the secondary device and the second electronic device, a first indication sent by the second electronic device, where the first indication is used to indicate the secondary device to change to a connectable state. The secondary device changes to the connectable state based on the first indication. After the secondary device changes to the connectable state, in response to that a connection request sent by a first electronic device is received, the secondary device establishes a connection to the first electronic device.

With reference to some embodiments of the seventh aspect, in some embodiments, the one or more processors are further configured to invoke the computer instructions to enable the secondary device to perform the following operations: The secondary device receives, through the connection between the second electronic device and the secondary device, a first message sent by the second electronic device, where the first message is used to verify whether an electronic device connected to the secondary device is the first electronic device. The secondary device determines, based on the first message, that the electronic device connected to the secondary device is the first electronic device.

With reference to some embodiments of the seventh aspect, in some embodiments, the first message includes a first MAC, and the first MAC is an address of the first electronic device.

According to an eighth aspect, an embodiment of this application provides a chip system. The chip system is used in an electronic device. The chip system includes one or more processors. The processor is configured to invoke computer instructions to enable the electronic device to perform the method according to any one of the second aspect, the third aspect, the fourth aspect, the possible implementations of the second aspect, the possible implementations of the third aspect, or the possible implementations of the fourth aspect.

According to a ninth aspect, an embodiment of this application provides a computer program product including instructions. When the computer program product is run on an electronic device, the electronic device is enabled to perform the method according to any one of the second aspect, the third aspect, the fourth aspect, the possible implementations of the second aspect, the possible implementations of the third aspect, or the possible implementations of the fourth aspect.

According to a tenth aspect, an embodiment of this application provides a computer-readable storage medium, including instructions. When the instructions are run on an electronic device, the electronic device is enabled to perform the method according to any one of the second aspect, the third aspect, the fourth aspect, the possible implementations of the second aspect, the possible implementations of the third aspect, or the possible implementations of the fourth aspect.

It can be understood that the electronic device provided in the second aspect, the chip system provided in the third aspect, the computer program product provided in the fourth aspect, and the computer storage medium provided in the fifth aspect are all configured to perform the methods provided in embodiments of this application. Therefore, for beneficial effect that can be achieved, refer to the beneficial effect of the corresponding methods. Details are not described herein again.

### BRIEF DESCRIPTION OF DRAWINGS

FIG. 1 is a diagram of an example interface for sharing a media file on a local electronic device according to an embodiment of this application;
FIG. 2 is a diagram of an example interface for receiving a shared link on a peer electronic device according to an embodiment of this application;
FIG. 3 is a diagram of an example in which a local electronic device connects to a Bluetooth headset connected to a peer electronic device according to this application;
FIG. 4A-1, FIG. 4A-2, FIG. 4B-1, FIG. 4B-2, and FIG. 4B-3 are diagrams of example interfaces for sharing a media file according to an embodiment of this application;
FIG. 5A-1, FIG. 5A-2, and FIG. 5B are diagrams of other example interfaces according to an embodiment of this application;

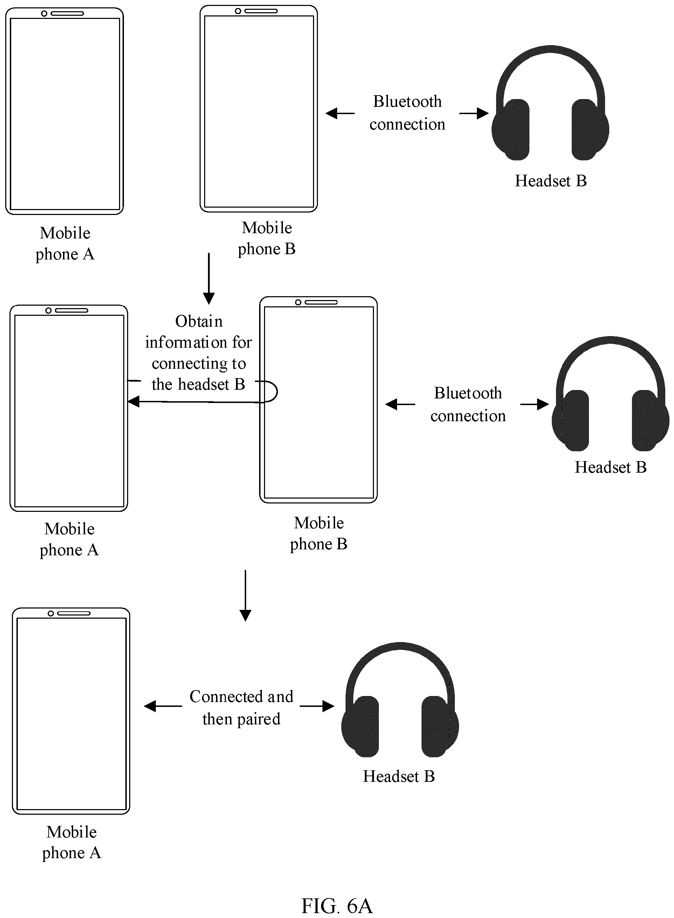

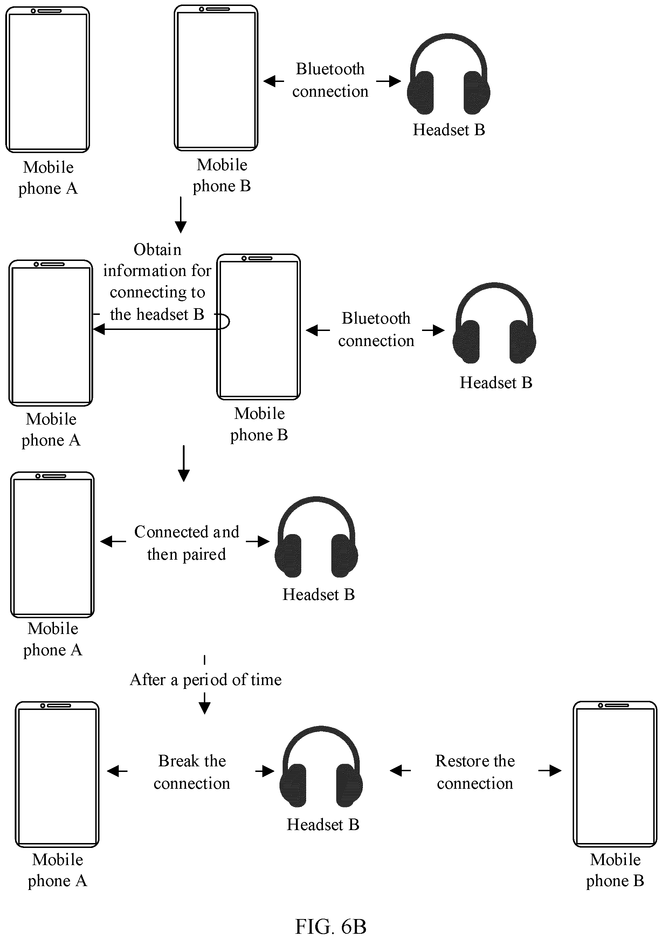

FIG. 6A and FIG. 6B are diagrams of example status changes in a case in which a local electronic device connects to a secondary device of a peer electronic device according to an embodiment of this application;

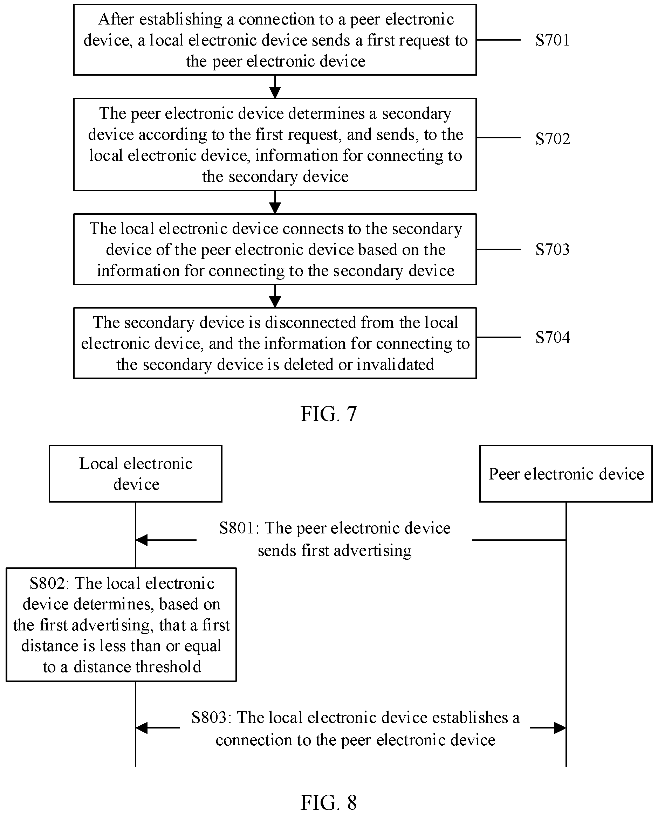

FIG. 7 is a diagram of an example method process of a communication method according to an embodiment of this application;
FIG. 8 is a diagram of an example occasion for triggering establishment of a connection between a local electronic device and a peer electronic device according to an embodiment of this application;

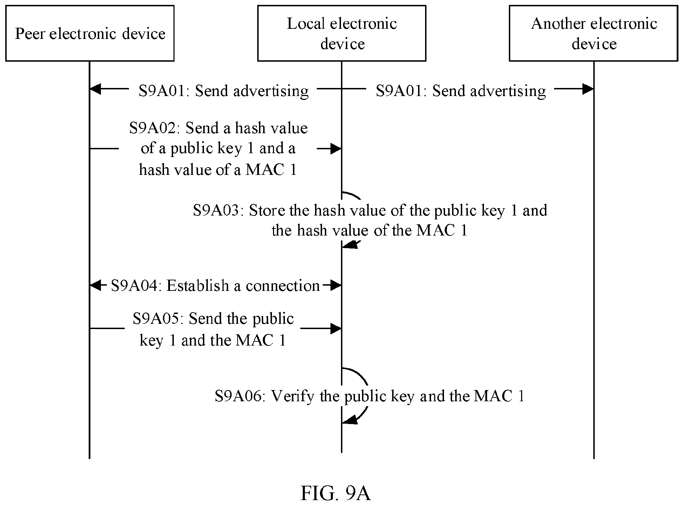

FIG. 9A is a diagram of an example in which a local electronic device and a peer electronic device perform security verification during connection establishment according to an embodiment of this application;

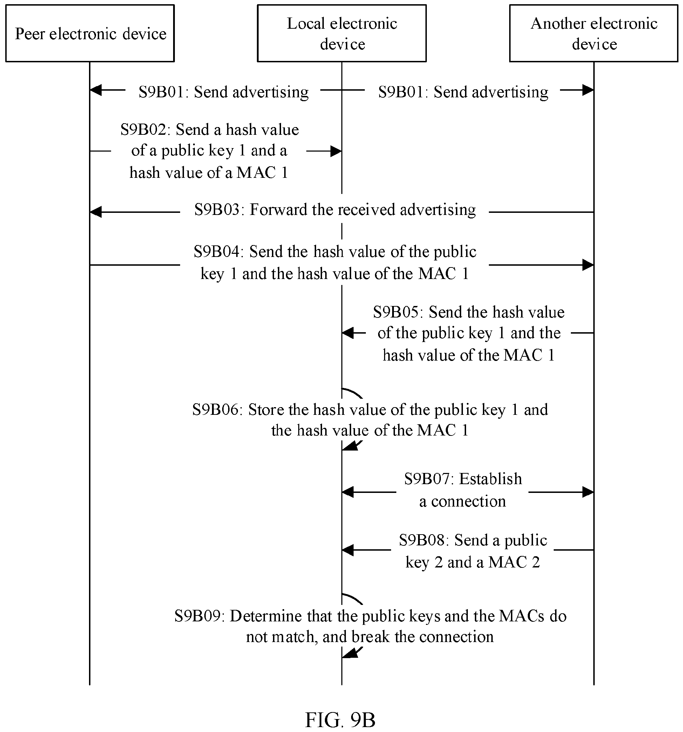

FIG. 9B is a diagram of an example in which a local electronic device and another electronic device perform security verification during connection establishment according to an embodiment of this application;

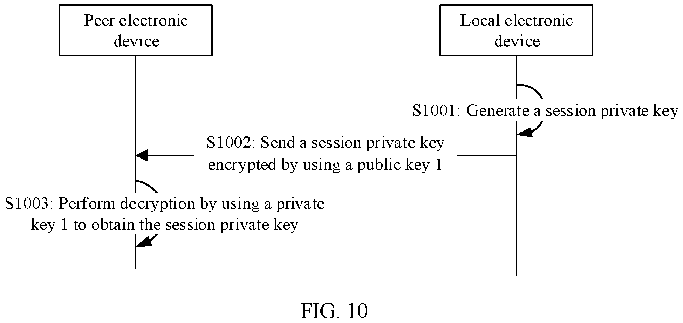

FIG. 10 is a diagram of an example in which a local electronic device and a peer electronic device exchange a session key according to an embodiment of this application;

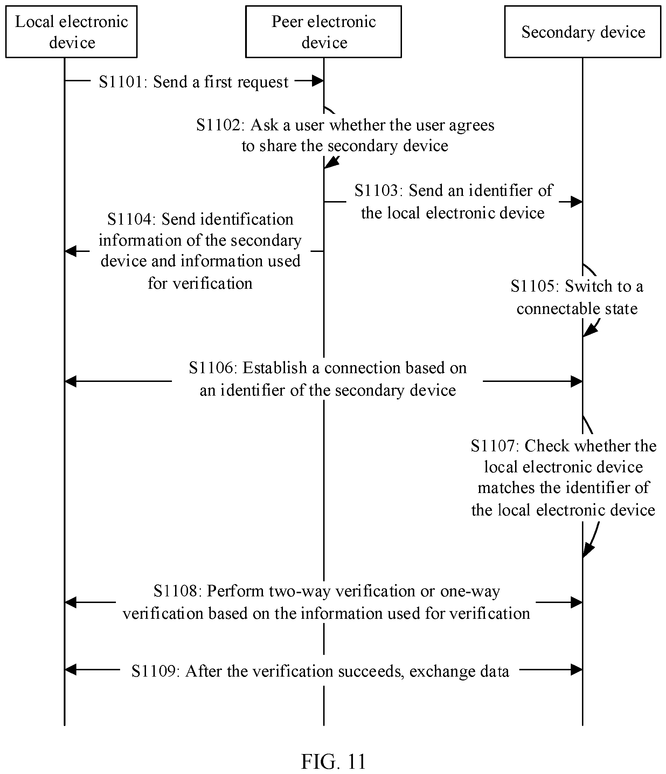

FIG. 11 is a diagram of an example in which a local electronic device connects to a secondary device according to an embodiment of this application;

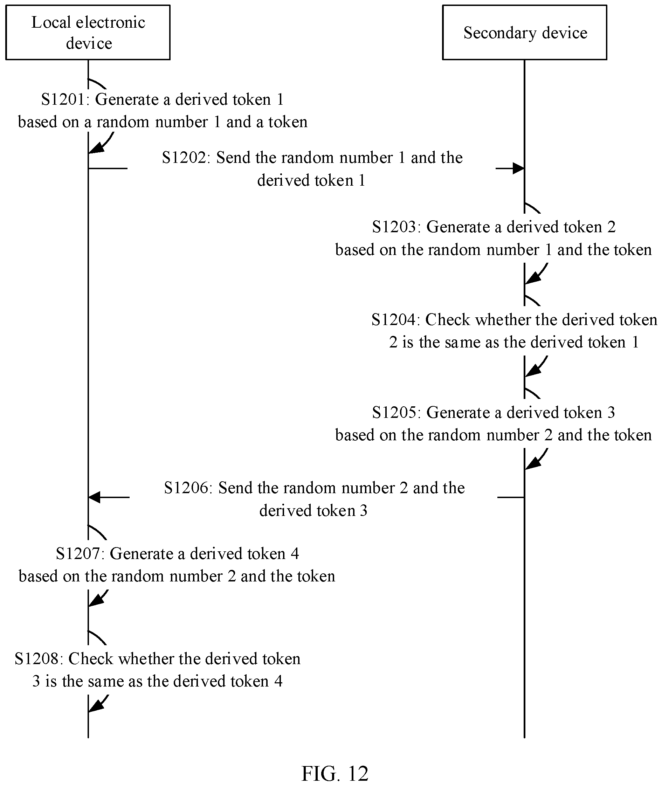

FIG. 12 is a diagram of an example of verification between a local electronic device and a secondary device according to an embodiment of this application;

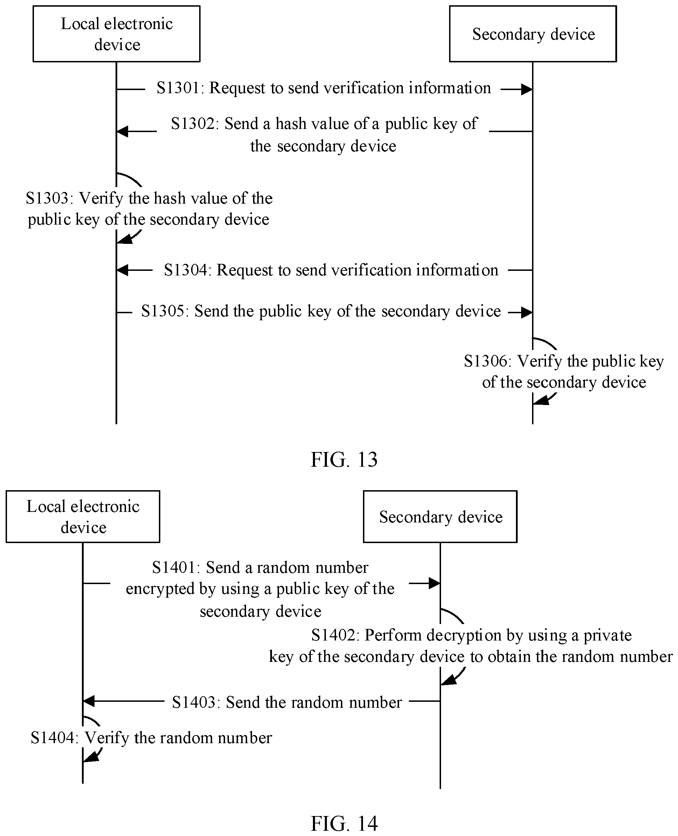

FIG. 13 is a diagram of another example of verification between a local electronic device and a secondary device according to an embodiment of this application;
FIG. 14 is a diagram of another example of verification between a local electronic device and a secondary device according to an embodiment of this application;

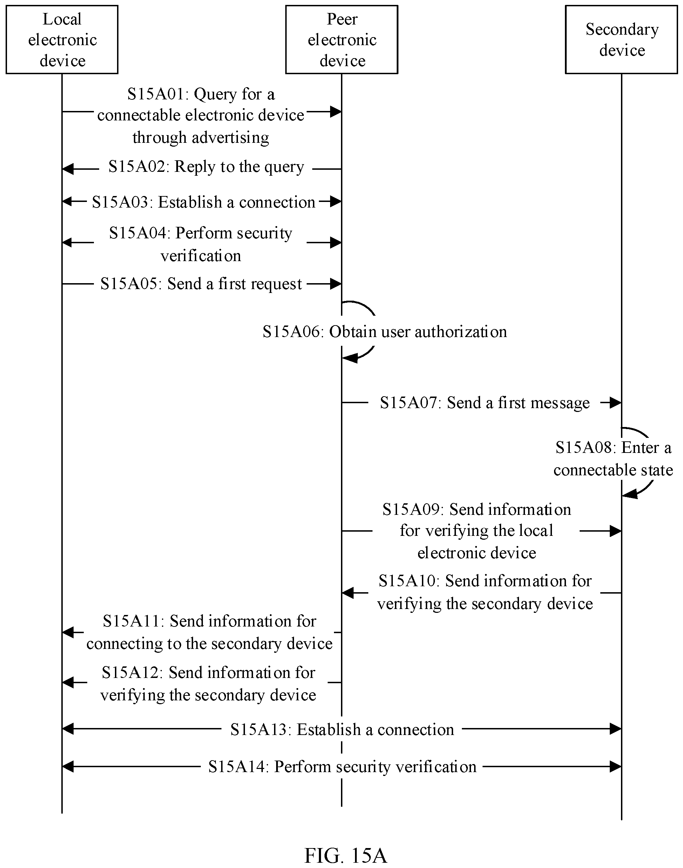

FIG. 15A is a diagram of an example method process of a communication method according to an embodiment of this application;

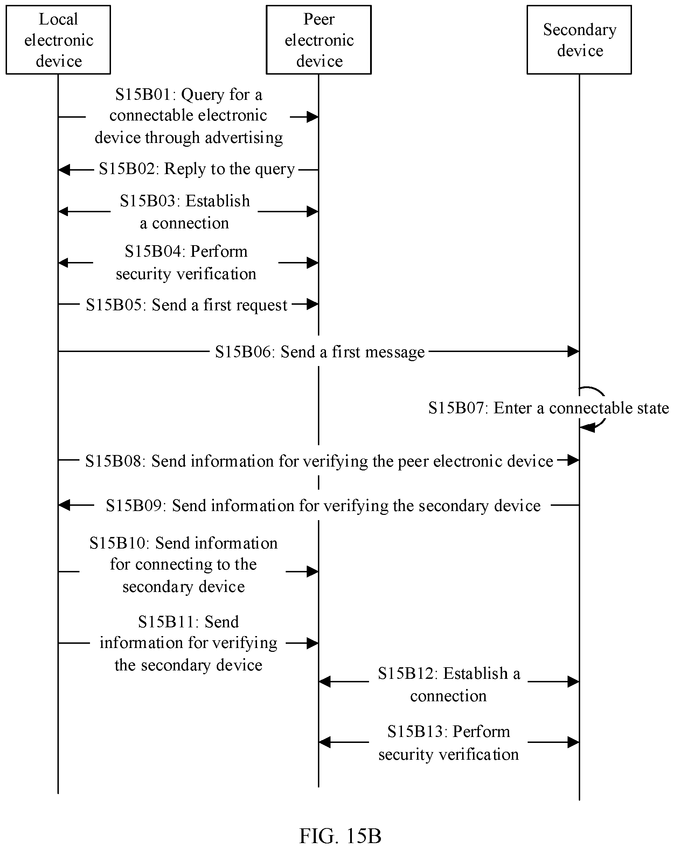

FIG. 15B is a diagram of an example method process of a communication method according to an embodiment of this application;

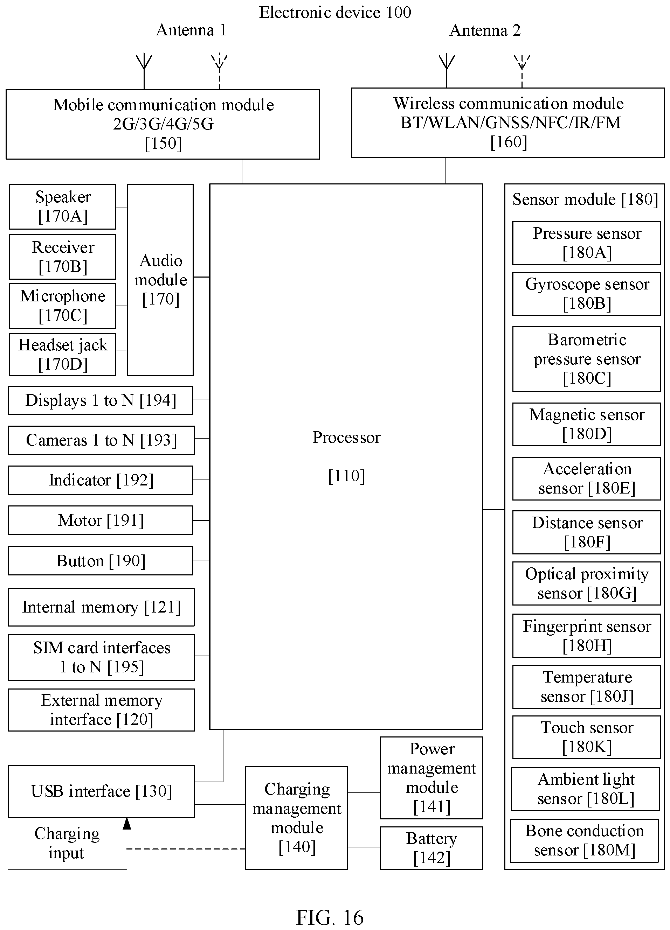

FIG. 16 is a diagram of an example hardware structure of a local electronic device, a peer electronic device, and a secondary device according to an embodiment of this application;

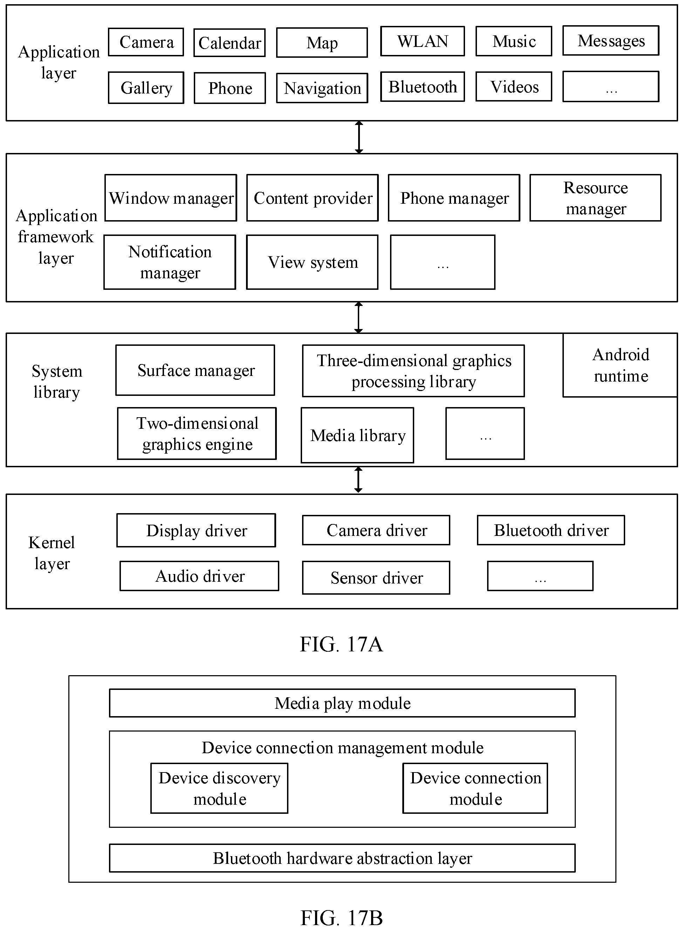

FIG. 17A is a diagram of an example software architecture of an electronic device according to an embodiment of this application; and
FIG. 17B is a diagram of another example software architecture of an electronic device according to an embodiment of this application.

### DESCRIPTION OF EMBODIMENTS

Terms used in the following embodiments of this application are merely intended to describe specific embodiments, but not to limit this application. The terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items.

The terms "first" and "second" used below are merely intended for a purpose of description, and shall not be construed as an indication or an implication of relative importance or an implicit indication of a quantity of indicated technical features. Therefore, a feature limited by "first" or "second" may explicitly or implicitly include one or more features. In descriptions of embodiments of this application, "a plurality of" means two or more than two, unless otherwise specified.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language, for example, Java or an extensible markup language (extensible markup language, XML). The source code of the interface is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element, for example, text, an icon, a button, a menu, a tab, a text box, a dialog box, a status bar, a navigation bar, or a widget, that is displayed on a display of the electronic device.

With development of electronic technologies, an increasing quantity of consumers start to use wireless devices, such as a Bluetooth headset, a wireless keyboard and mouse, a stylus, for example, a Huawei pencil, and other devices.

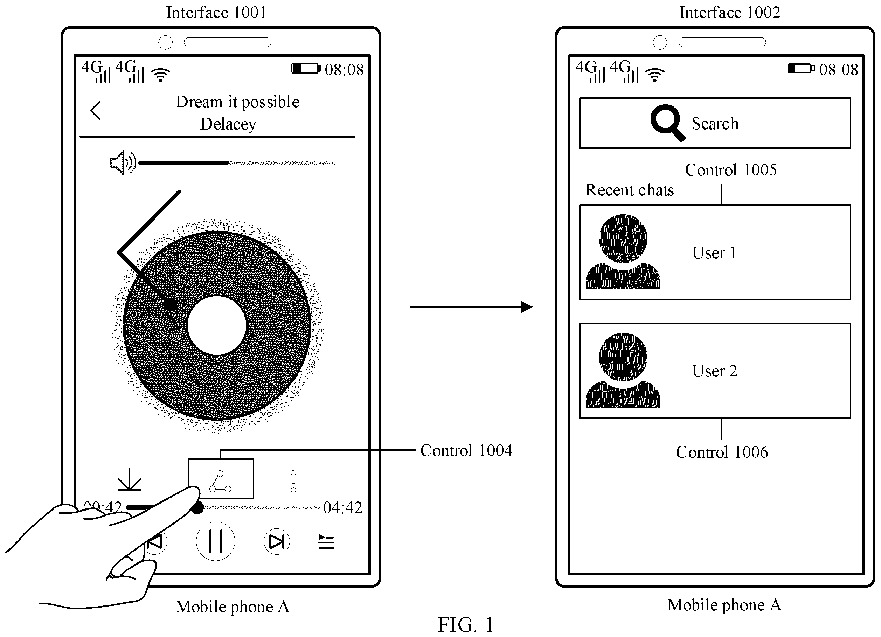

In some scenarios, when a local user wants to share music or another media file to one or more other peer users, a local electronic device shares, to a peer electronic device, a link corresponding to the media file. Example content is shown in FIG. 1. The local electronic device is an electronic device of the local user, and the peer electronic device is an electronic device of the peer user. In specific example descriptions, the local electronic device may be a mobile phone A, and the peer electronic device may be a mobile phone B. The peer electronic device and the local electronic device are peer ends of each other. In embodiments of this application, before a communication method provided in embodiments of this application is performed, an electronic device connected to a secondary device may also be referred to as a second electronic device, and a peer electronic device of the second electronic device may also be referred to as a first electronic device. The secondary device is an electronic device that supports a near field wireless communication technology, for example, the Bluetooth headset, the wireless keyboard and mouse, or the stylus mentioned above.

FIG. 1 is a diagram of an example interface for sharing a media file on a local electronic device according to an embodiment of this application.

A mobile phone A is the local electronic device. An interface 1001 in FIG. 1 is an example interface of a music application interface, and the music application interface includes a control 1004. The control 1004 is a control for sharing a currently played media file.

In response to that a user taps the control 1004, an interface displayed on the mobile phone A changes to an interface 1002 in FIG. 1. The interface 1002 in FIG. 1 is an example interface for selecting a user for sharing, and the interface includes one or more controls corresponding to one or more users. For example, as shown in the interface 1002 in FIG. 1, the interface includes a control 1005 and a control 1006. The control 1005 corresponds to a user 1, and the control 1006 corresponds to a user 2.

When a local user taps the control 1005 on the local electronic device, a link corresponding to the media file is sent, through the Internet, to a peer electronic device corresponding to the user 1. When the local user taps the control 1006 on the local electronic device, the link corresponding to the media file is sent to a peer electronic device corresponding to the user 2.

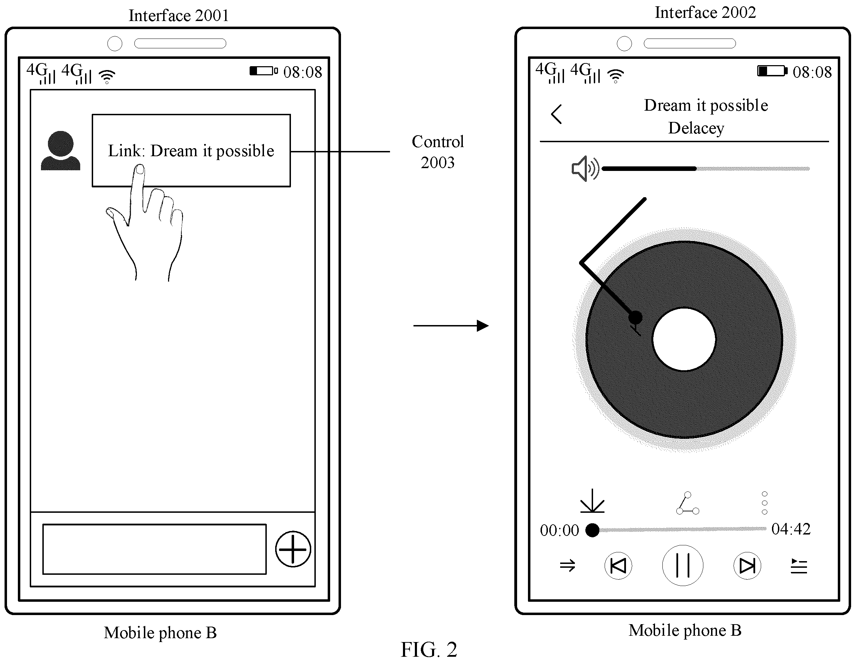

FIG. 2 is a diagram of an example interface for receiving a shared link on a peer electronic device according to an embodiment of this application.

An interface displayed on the peer electronic device is indicated by an interface 2001 in FIG. 2.

A mobile phone B is a local electronic device. After the local electronic device transmits, to the peer electronic device through the Internet, a link corresponding to a media file, an interface displayed on the peer electronic device may include a control 2003 corresponding to the link.

As shown in an interface 2002 in FIG. 2, in response to that a peer user taps the control 2003 displayed on the peer electronic device, the peer electronic device may start a music application, and start to play the media file corresponding to the link.

Clearly, the interaction method shown in FIG. 1 and FIG. 2 is a method for sharing music or another media file. However, clearly, in the method shown in FIG. 1 and FIG. 2, a same application needs to be installed on both the local electronic device and the peer electronic device. Further, when the music or the another media file is a paid resource, both the local user and the peer user need to be paid users. Further, it is difficult for the local user and the peer user to synchronize play progresses of the music or the another media file, or it is difficult to synchronize play progresses of the music or the another media file in real time due to a network delay.

Clearly, operations of the interaction method shown in FIG. 1 and FIG. 2 are quite complex, and the peer electronic device needs to meet a specific condition.

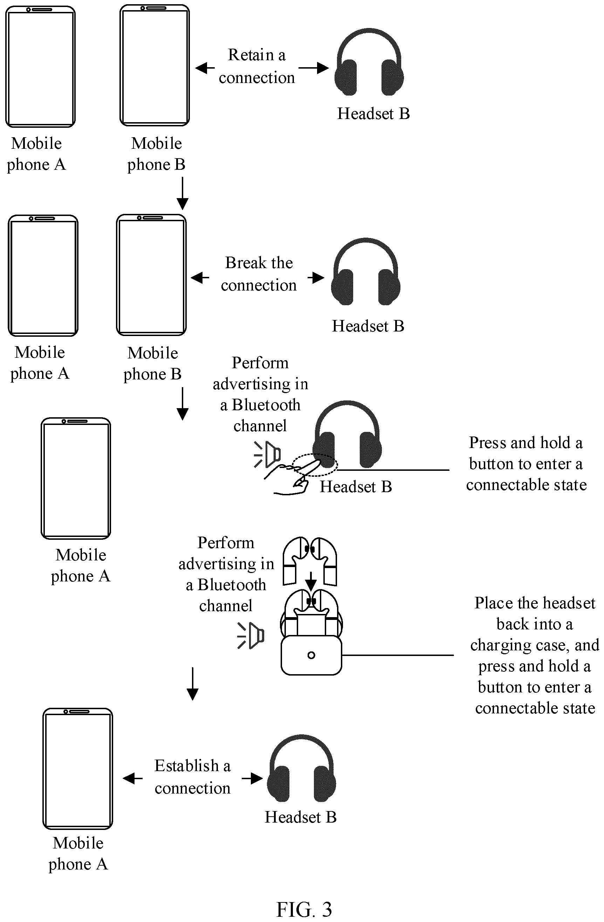

In some other scenarios, when a location of a local user is close to that of a peer user, to be specific, when a location of a user of a local electronic device is close to that of a user of a peer electronic device, the user may indicate, by performing an operation, the local electronic device to connect to a Bluetooth headset of the peer user, to share music or another media file, as shown in FIG. 3.

FIG. 3 is a diagram of an example in which a local electronic device connects to a Bluetooth headset connected to a peer electronic device according to this application.

In content shown in FIG. 3, a mobile phone A is the local electronic device, and a mobile phone B is the peer electronic device.

As shown in FIG. 3, first, the mobile phone B is connected to a headset B. Then a peer user performs an operation to indicate the mobile phone B to disconnect the mobile phone B from the headset B. Then the peer user or a local user performs an operation to set the headset B to a connectable state, where a function button on the headset B may be pressed and held, or the headset B may be placed back into a charging case, to enable the headset B to enter the connectable state. Finally, after the Bluetooth headset enters the connectable state, the local user may perform an operation to indicate the mobile phone A to establish a connection to the headset B.

With reference to the content shown in FIG. 3, in the method shown in FIG. 3, the local user or the peer user needs to perform complex operations, so that the Bluetooth headset originally connected to the peer electronic device can be reconnected to the local electronic device. In addition, in the manner shown in FIG. 3, after the Bluetooth headset enters the connectable state, the Bluetooth headset may be further connected to an electronic device other than the local electronic device. Consequently, security is poor.

An electronic device in a connectable state is capable of being connected and being paired.

In the content shown in FIG. 3, the headset B is manually set from a connected (connected) state to an advertising (advertiser/advertising) state, and then enters the connected (connected) state again after the connection is established.

With reference to the content described above, it can be easily learned that, when the local electronic device connects to a Bluetooth headset that is not paired with the local electronic device and that is connected to the peer electronic device, or connects to another electronic device that is connected to the peer electronic device based on a near field wireless communication technology, the user needs to perform complex operations, and security is poor.

Based on this, embodiments of this application provide a communication method, to enable a local electronic device to connect to a secondary device of a peer electronic device in an ease-of-operation and secure manner.

The secondary device of the peer electronic device is an electronic device that has not been paired with the local electronic device. Alternatively, the secondary device of the peer electronic device is an electronic device that stores no pairing information for pairing with the local electronic device. For ease of description, the secondary device of the peer electronic device is referred to as a secondary device below. In specific example descriptions, the secondary device may be a headset B.

The secondary device may be connected to the peer electronic device. Alternatively, the secondary device was ever connected to the peer electronic device, and may store related information for connecting to the peer electronic device.

The secondary device may be connected to the peer electronic device and/or the local electronic device based on any near field wireless communication technology, for example, Bluetooth, ZigBee, Wi-Fi, or Apple Wireless Direct Link (Apple Wireless Direct Link, AWDL). This is not limited herein.

The secondary device may be an electronic device that supports at least one of the foregoing near field wireless communication technologies, for example, a Bluetooth headset, a wireless keyboard and mouse, a stylus, a gamepad, VR glasses, a key (a key of a security door or a key of a vehicle), a television, an electric rice cooker, or a smart home appliance.

If a device type of the secondary device varies, an application scenario of the communication method provided in embodiments of this application may also vary. Several application scenarios of the communication method provided in embodiments of this application are described below as examples.

FIG. 4A-1, FIG. 4A-2, FIG. 4B-1, FIG. 4B-2, and FIG. 4B-3 are diagrams of example interfaces for sharing a media file according to an embodiment of this application.

In content shown in FIG. 4A-1, FIG. 4A-2, FIG. 4B-1, FIG. 4B-2, and FIG. 4B-3, a mobile phone A is a local electronic device, and a mobile phone B is a peer electronic device.

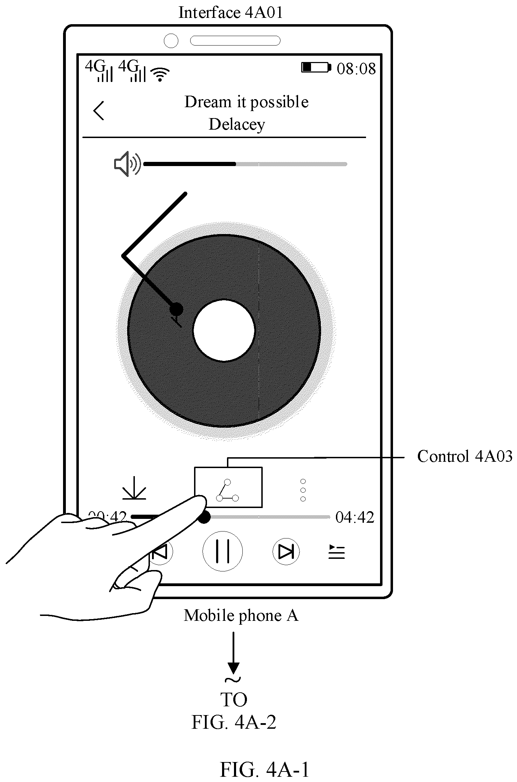

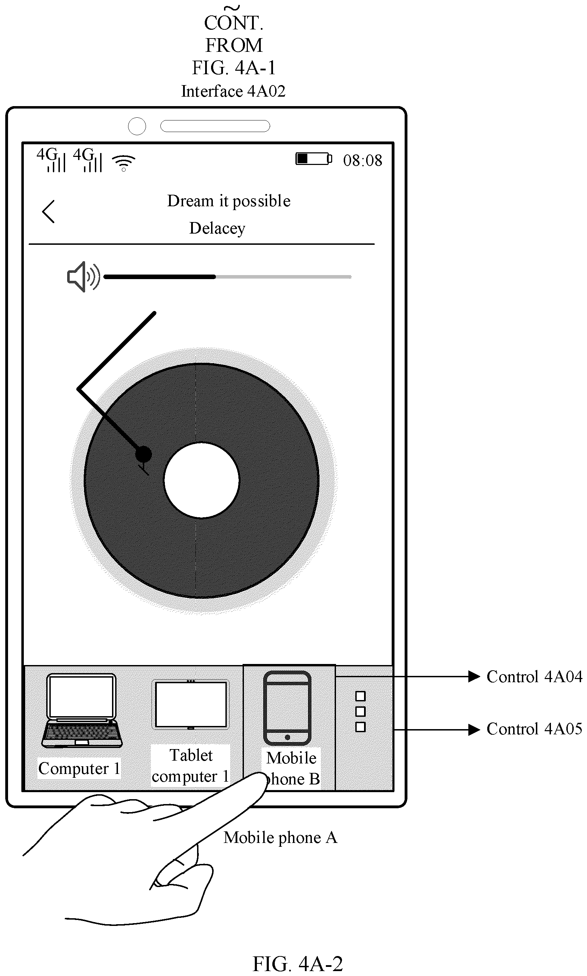

An interface 4A01 in FIG. 4A-1 is the same as the interface 1001 in FIG. 1. Refer to the text descriptions of FIG. 1. Details are not described herein again.

However, a difference from overall content shown in FIG. 1 lies in that, as shown in an interface 4A02 in FIG. 4A-2, in response to that a user taps a control 4A03, the local electronic device displays a control 4A04. The control 4A04 may also be referred to as a prompt box, a pop-up window, a small window, or the like. This is not limited herein. The control 4A04 may include one or more controls, and the one or more controls correspond to one or more peer electronic devices. A control 4A05 corresponds to the mobile phone B.

After the user taps the control 4A05, interface changes on the local electronic device and the peer electronic device are shown in an interface 4B01 and an interface 4B03 in FIG. 4B-1 and FIG. 4B-3. Content displayed on an interface on the peer electronic device includes a control 4B04. The control 4B04 may also be referred to as a prompt box, a pop-up window, a small window, or the like. The control 4B04 includes a control 4B05. The control 4B04 further includes text for prompting a peer user. The text may be "Mobile phone A wants to share music Dream it possible to you", or may be other text for prompting a user to determine whether to accept music sharing, or may be other text for prompting a user whether to share a headset B to the local electronic device. This is not limited herein.

In the content shown in FIG. 4A-1, FIG. 4A-2, FIG. 4B-1, FIG. 4B-2, and FIG. 4B-3, the headset B is a secondary device of the mobile phone B.

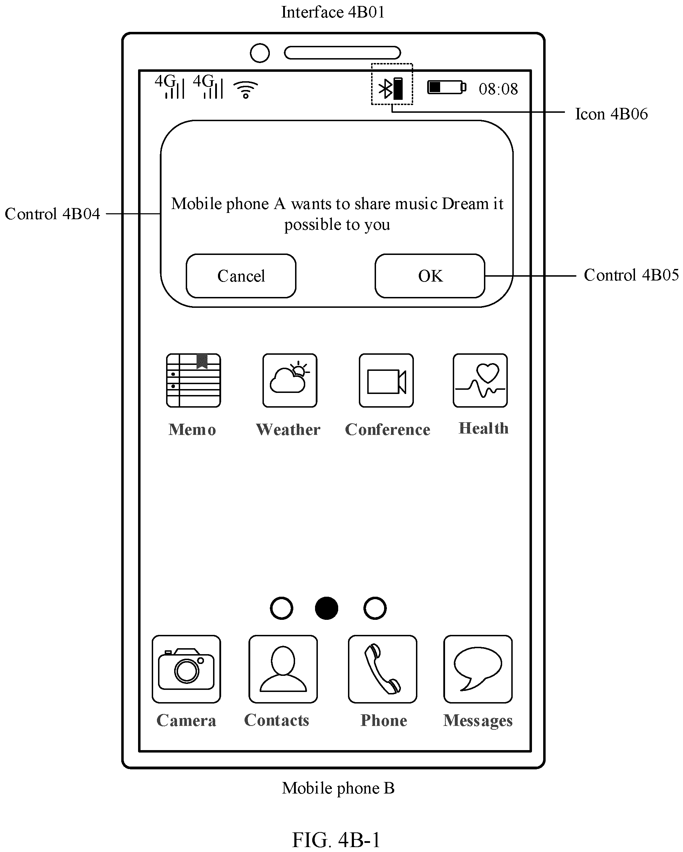

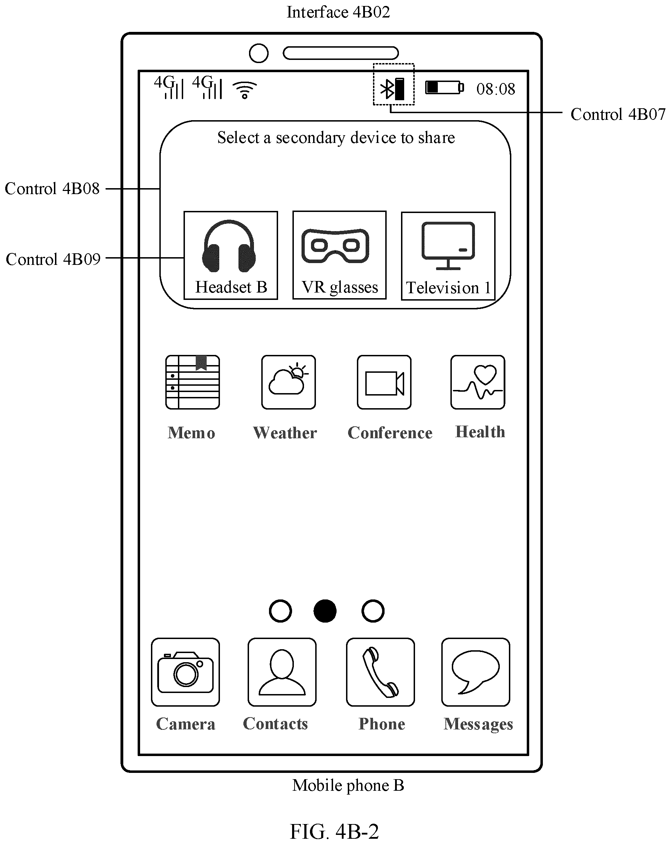

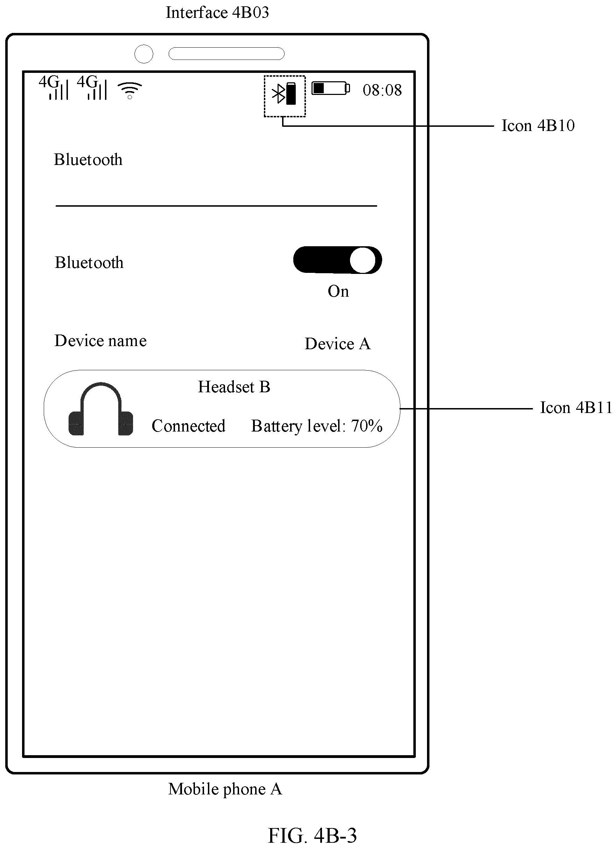

In content shown on the interface 4B01 in FIG. 4B-1, an interface on the mobile phone B further includes an icon 4B06. The icon 4B06 is used to identify a Bluetooth connection, and indicate that the mobile phone B is connected to the headset B.

After the user taps the control 4A05, the local electronic device automatically establishes a Bluetooth connection to the headset B. A Bluetooth setting interface of the local electronic device is indicated by the interface 4B03 in FIG. 4B-3, and the Bluetooth setting interface includes an icon 4B11. The icon 4B11 corresponds to the headset B, and is used to notify the user that the headset B has established a connection to the local electronic device.

In content shown on the interface 4B03 in FIG. 4B-3, an interface on the mobile phone A further includes an icon 4B 10. The icon 4B10 is used to identify a Bluetooth connection, and indicate that the mobile phone A is connected to the headset B.

Optionally, in some embodiments of this application, after the user taps the control 4A05, interface changes on the local electronic device and the peer electronic device are shown in an interface 4B02 and an interface 4B03 in FIG. 4B-2 and FIG. 4B-3. In content shown on the interface 4B02 in FIG. 4B-2, content displayed on an interface on the peer electronic device includes a control 4B08. The control 4B08 may also be referred to as a prompt box, a pop-up window, a small window, or the like. The control 4B08 includes a control 4B09. The control 4B08 further includes text for prompting a peer user. The text may be "Select a secondary device to share", or may be other text for prompting a user to determine a secondary device. This is not limited herein. After the user taps the control 4B09, the local electronic device automatically establishes a Bluetooth connection to the headset B. A Bluetooth setting interface of the local electronic device is indicated by the interface 4B03 in FIG. 4B-3.

Optionally, in some embodiments of this application, after the user taps the control 4A05, interface changes on the local electronic device and the peer electronic device are shown in an interface 4B01, an interface 4B02, and an interface 4B03 in FIG. 4B-3.

It should be noted that the establishment of the Bluetooth connection between the headset B and the local electronic device does not necessarily cause a Bluetooth disconnection between the local electronic device and another device. After the headset B establishes the Bluetooth connection to the local electronic device, the headset B may retain a connection to the peer electronic device, or may be disconnected from the peer electronic device. This is not limited herein.

FIG. 5A-1, FIG. 5A-2, and FIG. 5B are diagrams of other example interfaces according to an embodiment of this application.

As shown in FIG. 5A-1 and FIG. 5A-2, a user may perform a sliding-down operation to enable a mobile phone A to display a control center interface, as indicated by a process of changing from an interface 5A01 to an interface 5A02. The interface 5A01 is a home screen of the mobile phone A, and the interface 5A02 is the control center interface of the mobile phone A.

On the interface 5A02, the interface 5A02 includes a control 5A05. The control 5A05 is a control corresponding to multimedia playing of music. In response to that the user taps the control 5A05, an interface on the mobile phone A changes to an interface 5A03.

On the interface 5A03, the interface 5A03 includes a control 5A06. The control 5A06 is used to display a connected audio output device, for example, a headset A. The control 5A06 includes a control 5A07 and a control 5A08. The control 5A07 is a control corresponding to the headset A. Text on the control 5A08 is "Share to another headset".

After the user taps the control 5A08, an interface displayed on the mobile phone A is an interface 5A04.

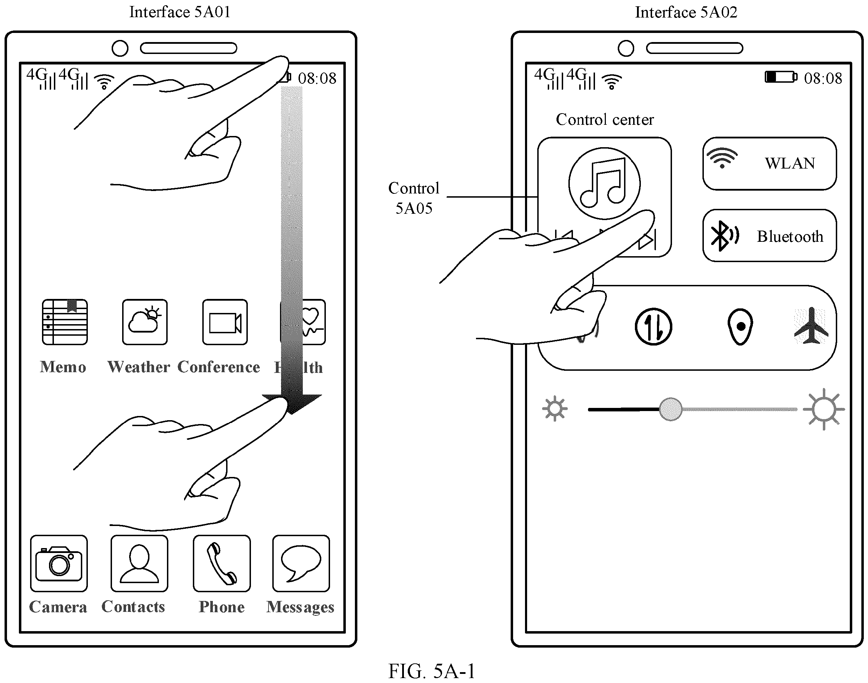

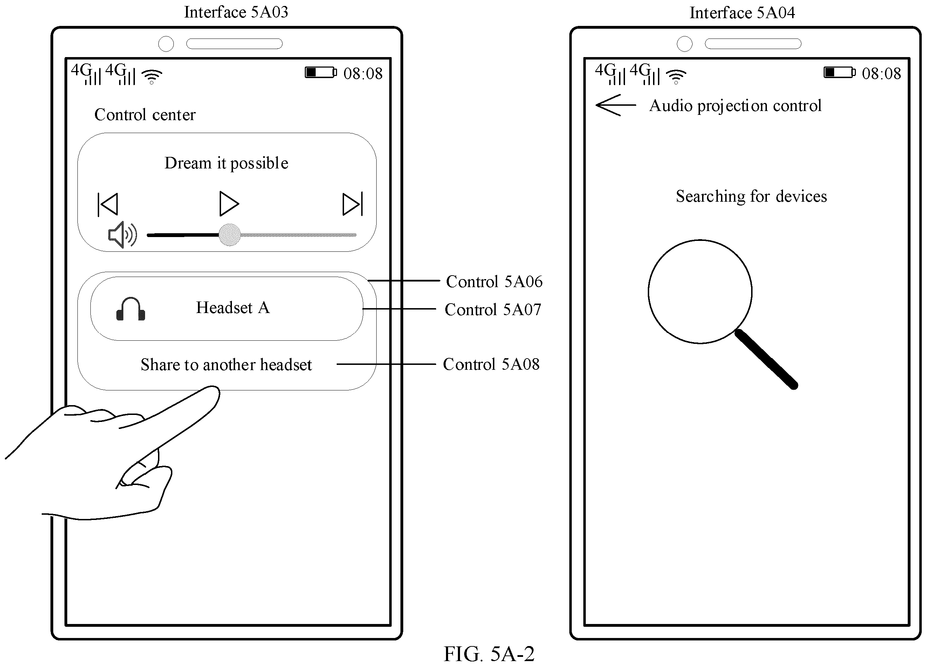

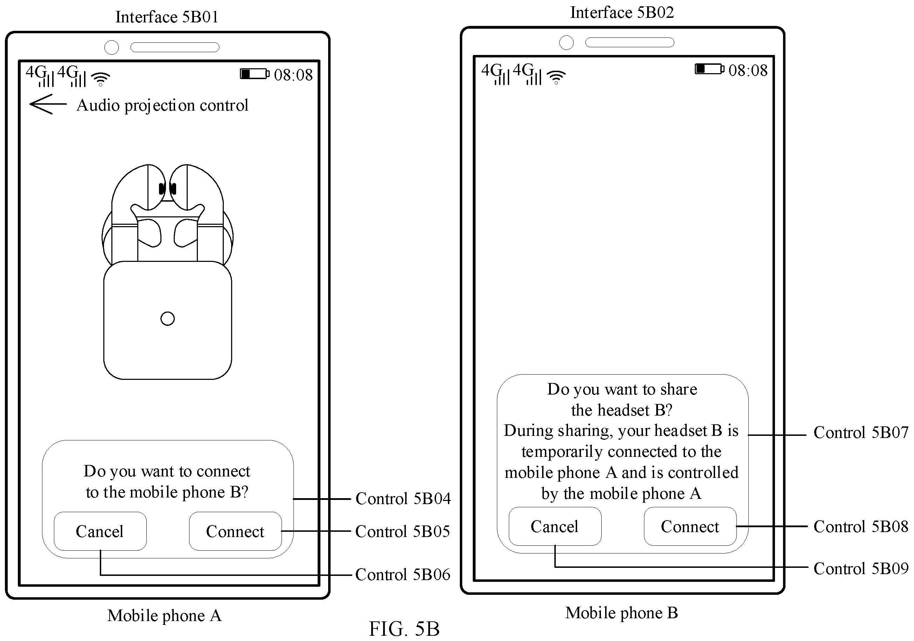

As shown in FIG. 5B, after the mobile phone A discovers a mobile phone B, an interface displayed on the mobile phone A changes from the interface 5A04 to an interface 5B01. The interface 5B01 includes a control 5B04. The control 5B04 includes a control 5B05 and a control 5B06. Text displayed on the control 5B04 is "Do you want to connect to the mobile phone B?". Text displayed on the control 5B05 is "Connect". Text displayed on the control 5B06 is "Cancel".

After the user taps the control 5B05, an interface displayed on the mobile phone B is an interface 5B02. The interface 5B02 includes a control 5B07. The control 5B07 includes a control 5B08 and a control 5B09. Text displayed on the control 5B07 is "Do you want to share the headset B?" and "During sharing, your headset B is temporarily connected to the mobile phone A and is controlled by the mobile phone A". Text displayed on the control 5B08 is "Connect". Text displayed on the control 5B09 is "Cancel".

It should be noted that the control 5B07, the control 5B04, and the control 5A06 in the foregoing descriptions may also be referred to as a prompt box, a pop-up window, a small window, or the like. This is not limited herein. In addition, other text prompt information may alternatively appear on the control 5B07, the control 5B04, and the control 5A06, and is not limited to the content shown in FIG. 5A-1, FIG. 5A-2, and FIG. 5B. This is not limited herein.

FIG. 6A and FIG. 6B are diagrams of example status changes in a case in which a local electronic device connects to a secondary device of a peer electronic device according to an embodiment of this application.

In content shown in FIG. 6A, a mobile phone A is a local electronic device, a mobile phone B is a peer electronic device, and a secondary device is a headset B connected to the mobile phone B.

First, the mobile phone B retains a connection to the headset B. Then the mobile phone A obtains, from the mobile phone B, information for connecting to and pairing with the headset B. Finally, the mobile phone A and the headset B are connected and then paired.

In content shown in FIG. 6A, the headset B automatically changes from a connected state to a connectable state.

When the headset B is a Bluetooth low energy (BLE) device, the headset B changes from the connected state to an advertising state, and then enters the connected state again after the connection is established. The advertising state may also be referred to as the connectable state. When the headset is a classic Bluetooth (BR/EDR) device, the headset B changes from the connected state to a page scan (page scan) state, and then enters the connected state again after the connection is established. The page scan state may also be referred to as the connectable state.

When the headset B is in the advertising state, the headset B advertises information about the headset B, so that the local electronic device can discover and connect to the headset B.

As shown in FIG. 6B, after the headset B is connected to the mobile phone A for a period of time, the headset B is disconnected from the mobile phone A, and restores a connection to the mobile phone B.

Duration of the connection between the headset B and the mobile phone A may be related to a service that is run on the mobile phone A, or may be a preset fixed value. For example, in the media file sharing scenario shown in FIG. 4A-1, FIG. 4A-2, FIG. 4B-1, FIG. 4B-2, and FIG. 4B-3, the duration of the connection between the headset B and the mobile phone A may be equal to play duration of the media file.

It should be noted that the communication method provided in this application is not limited to the scenario shown in FIG. 4A-1, FIG. 4A-2, FIG. 4B-1, FIG. 4B-2, and FIG. 4B-3, and may be further used in another scenario. This is not limited herein. For example, the local electronic device and the peer electronic device each may be a notebook computer, and the secondary device of the peer electronic device may be a wireless keyboard and mouse. For another example, the local electronic device and the peer electronic device each may be a mobile phone or a host, and the secondary device of the peer electronic device may be VR/AR glasses or the like.

With reference to content shown in FIG. 7, the following describes an example communication method provided in this application.

FIG. 7 is a diagram of an example method process of a communication method according to an embodiment of this application.

As shown in FIG. 7, the communication method provided in this application includes three steps: step S701, step S702, and step S703. The three steps are separately described below.

S701: After establishing a connection to a peer electronic device, a local electronic device sends a first request to the peer electronic device.

An occasion for triggering establishment of the connection between the local electronic device and the peer electronic device may vary with different scenarios. This is not limited herein.

For example, in content shown in FIG. 4A-1, FIG. 4A-2, FIG. 4B-1, FIG. 4B-2, and FIG. 4B-3, after a user taps a control 4A04 on the local electronic device, the local electronic device establishes the connection to the peer electronic device.

For another example, in content shown in FIG. 5A-1, FIG. 5A-2, and FIG. 5B, after a user taps a control 5A08 on the local electronic device, the local electronic device starts to receive advertising, and in a process of receiving advertising, receives advertising sent by the peer electronic device, and discovers the peer electronic device. After the local electronic device discovers the peer electronic device, an interface on the local electronic device changes from an interface 5A04 to an interface 5B01. After the user taps a control 5B05, the local electronic device establishes the connection to the peer electronic device.

The first request may be a request for sharing data, or the first request may be a request for requesting to connect to a secondary device of the peer electronic device.

Optionally, in some embodiments of this application, the local electronic device may alternatively not establish a connection to the peer electronic device, and some or all data exchange in embodiments of this application is performed through advertising in an advertising channel.

Optionally, in some embodiments of this application, before the local electronic device establishes the connection to the peer electronic device, the local electronic device may discover one or more peer electronic devices in a plurality of other manners such as advertising.

Optionally, in some embodiments of this application, after the user taps a control 4A03 on the local electronic device, the local electronic device starts to discover one or more peer electronic devices, and after the user taps a control 4B05, the local electronic device establishes a connection to the peer electronic device.

The local electronic device may establish a plurality of types of connections to the peer electronic device. This is not limited herein. For example, the local electronic device may establish a connection to the peer electronic device in a plurality of protocols or modes such as Bluetooth, ZigBee, Wi-Fi, and Apple Wireless Direct Connect (apple wireless direct link, AWDL).

After establishing the connection to the peer electronic device, the local electronic device may send the first request to the peer electronic device.

Optionally, in some embodiments of this application, the first request may include obtaining information for connecting to the secondary device of the peer electronic device, and/or the first request may include information about a service that is run on the local electronic device. For example, in the content shown in FIG. 4A-1, FIG. 4A-2, FIG. 4B-1, FIG. 4B-2, and FIG. 4B-3, the first request may include a media file sharing service.

Optionally, in some embodiments of this application, the first request is used to share data, for example, a multimedia file. For example, in the content shown in FIG. 4A-1, FIG. 4A-2, FIG. 4B-1, FIG. 4B-2, and FIG. 4B-3, the first request may be used to share a music file or an audio stream.

Optionally, in some embodiments of this application, the first request may include a device type of the secondary device. For example, the device type may be an audio output device, a Bluetooth headset, VR glasses, or a remote control. This is not limited herein.

Optionally, in some embodiments of this application, the first request may carry time information, and the time information may indicate duration in which the local electronic device needs to use the secondary device. For example, after duration of a connection between the local electronic device and the secondary device reaches the duration, the secondary device is automatically disconnected from the local electronic device, and restores a connection between the secondary device and the peer electronic device.

Optionally, in some embodiments of this application, in a process in which the local electronic device establishes the connection to the peer electronic device, the local electronic device and the peer electronic device may exchange public keys of each other, to encrypt, in a subsequent step, data that needs to be exchanged.

Optionally, in some embodiments of this application, the local electronic device may obtain a public key of the secondary device of the peer electronic device through the peer electronic device, to encrypt, in a subsequent step, data that needs to be exchanged.

Optionally, in some embodiments of this application, in a process in which the local electronic device establishes the connection to the peer electronic device, the local electronic device and the peer electronic device may perform security verification, to prevent another device from establishing a connection to the local electronic device or the peer electronic device. Optionally, in some embodiments of this application, security verification may be performed after a connection is established, and the local electronic device breaks the connection after the security verification fails. Security verification may be performed based on a physical address (Media Access Control Address, MAC) of the local electronic device or the peer electronic device.

It should be noted that, when the local electronic device is connected to the peer electronic device based on a classic Bluetooth protocol, the MAC is a fixed MAC; or when the local electronic device is connected to the peer electronic device based on Bluetooth low energy, the MAC may be a fixed MAC or a random MAC. Similarly, in the following descriptions, a MAC used for the connection between the local electronic device and the secondary device may also be a fixed MAC or a random MAC based on different protocols.

It should be noted that, as a specific near field communication technology on which the connection depends complies with different protocols, identifiers of the local electronic device and/or the peer electronic device and/or the secondary device may also vary.

By using content shown in FIG. 8, FIG. 9A, and FIG. 9B, the following describes example processes of connection and security verification between a local electronic device and a peer electronic device in a case in which the local electronic device and the peer electronic device are connected through Bluetooth.

FIG. 8 is a diagram of an example occasion for triggering establishment of a connection between a local electronic device and a peer electronic device according to an embodiment of this application.

S801: The peer electronic device sends first advertising.

The peer electronic device may periodically send the first advertising to a surrounding device.

S802: The local electronic device determines, based on the first advertising, that a first distance is less than or equal to a distance threshold.

After receiving the first advertising, the local electronic device determines, based on signal attenuation of the first advertising, that a distance between the peer electronic device and the local electronic device is the first distance. The local electronic device determines values of the first distance and the distance threshold, and if the first distance is less than or equal to the distance threshold, performs step S803 to start to establish a connection to the peer electronic device. Alternatively, if the first distance is greater than the distance threshold, the local electronic device does not establish a connection to the peer electronic device.

Optionally, in some embodiments of this application, on an interface shown in FIG. 5A-1 and FIG. 5A-2 in the foregoing descriptions, after a user taps a control 5A08 on an interface 5A03 on the local electronic device, the local electronic device starts to receive or parse the first advertising, and determines the first distance based on the first advertising.

There are many methods for determining the first distance based on the first advertising. This is not limited herein. For example, the first distance may be determined based on a received signal strength indicator (received signal strength indication, RSSI).

Optionally, in some embodiments of this application, the local electronic device may alternatively actively send first advertising, the peer electronic device sends a first response to the local electronic device after receiving the first advertising, and the local electronic device determines a distance between a first electronic device and a second electronic device based on the first response.

Optionally, in some embodiments of this application, the local electronic device may alternatively actively send first advertising, and the peer electronic device sends a first response to the local electronic device after receiving the first advertising, where the first response includes a distance 1, and the distance 1 is determined based on an RSSI of the first advertising. The local electronic device determines, based on the distance 1, whether an electronic device sending the first response is the peer electronic device. To be specific, when the distance 1 is less than or equal to the distance threshold, the electronic device sending the first response is the peer electronic device.

Optionally, in some embodiments of this application, the local electronic device may alternatively actively send first advertising, and the peer electronic device sends a first response to the local electronic device after receiving the first advertising, where the first response includes a distance 1, and the distance 1 is determined based on an RSSI of the first advertising. After the local electronic device determines a distance 2 based on an RSSI of the first response, the local electronic device determines, based on the distance 1 and the distance 2, whether the local electronic device and an electronic device sending the first response are peer electronic devices. If an average value of the distance 1 and the distance 2 is less than or equal to the distance threshold, the electronic device sending the first response is the peer electronic device.

S803: The local electronic device establishes a connection to the peer electronic device.

With reference to content shown in FIG. 8, it can be understood that, when the distance between the local electronic device and the peer electronic device is less than the distance threshold, the local electronic device prompts, on an interface only after discovering the peer electronic device, the user whether to establish a connection to the peer electronic device.

FIG. 9A is a diagram of an example in which a local electronic device and a peer electronic device perform security verification during connection establishment according to an embodiment of this application.

As shown in FIG. 9A, a process of establishing a connection between the local electronic device and the peer electronic device includes the following steps.

S9A01: Send advertising.

The local electronic device sends advertising in an advertising channel, to discover a surrounding connectable electronic device. In content shown in FIG. 9A, the peer electronic device and the local electronic device may receive the advertising.

S9A02: Send a hash value of a public key 1 and a hash value of a MAC 1.

After the peer electronic device receives the advertising, response performed by the peer electronic device includes: sending the hash value of the public key 1 and the hash value of the MAC 1 to the local electronic device. A Bluetooth MAC of the peer electronic device is the MAC 1.

Optionally, in some embodiments of this application, the MAC 1 is a public address (public address) of the peer electronic device.

The peer electronic device and the local electronic device exchange data still through the advertising channel.

The public key 1 corresponds to a private key 1, and the private key 1 is private to the peer electronic device. Before step S9A05 is performed, the public key 1 is also private to the peer electronic device.

Optionally, in some embodiments of this application, the peer electronic device may alternatively send a hash value of an operation result of the public key 1 and the MAC.

S9A03: Store the hash value of the public key 1 and the hash value of the MAC 1.

After receiving the hash value of the public key 1 and the hash value of the MAC 1, the local electronic device may locally store the hash values of the public key 1 and the MAC 1 for performing security verification in a subsequent step.

Optionally, in some embodiments of this application, when the peer electronic device may alternatively send the hash value of the operation result of the public key 1 and the MAC, the local electronic device may also verify the value.

S9A04: Establish a connection.

The local electronic device establishes a connection to the peer electronic device.

It should be noted that, when the local electronic device establishes the connection to the peer electronic device, data is exchanged between the local electronic device and the peer electronic device in a point-to-point mode. To be specific, another electronic device cannot obtain content of data exchange between the local electronic device and the peer electronic device.

S9A05: Send the public key 1 and the MAC 1.

The peer electronic device sends the public key 1 and the MAC 1 to the local electronic device.

The local electronic device has established the connection to the peer electronic device, and data sent through the connection cannot be obtained by another electronic device. Therefore, the another electronic device cannot obtain the public key 1 or the MAC 1.

S9A06: Verify the public key 1 and the MAC 1.

The local electronic device separately verifies the public key 1 and the MAC 1 by using the hash value of the public key 1 and the hash value of the MAC 1 respectively.

Optionally, in some embodiments of this application, in step S9A02, the peer electronic device may send the hash value of the public key 1 or the hash value of the MAC 1; in step S9A05, the peer electronic device may send the public key 1 or the MAC 1; and in step S9A06, the local electronic device may verify the public key 1 or the MAC 1.

It can be understood that the local electronic device may determine, by verifying a public key and/or a MAC, that a connected peer electronic device is an electronic device selected by a user, but not another electronic device. For an interface on which the user selects an electronic device, refer to the content shown on the interface 4B02 in FIG. 4B-2. Details are not described herein again. FIG. 9B is a diagram of an example in which a local electronic device and another electronic device perform security verification during connection establishment according to an embodiment of this application.

As shown in FIG. 9B, a process of establishing a connection between the local electronic device and a peer electronic device includes the following steps.

S9B01: Send advertising.

The local electronic device sends advertising in an advertising channel, to discover a surrounding connectable electronic device. In content shown in FIG. 9B, the peer electronic device and the local electronic device may receive the advertising.

S9B02: Send a hash value of a public key 1 and a hash value of a MAC 1.

For specific content, refer to step S9A02 in the foregoing descriptions. Details are not described herein again.

S9B03: Forward the received advertising.

Because the another electronic device may also receive the advertising from the local electronic device, the another electronic device may forward the advertising from the local electronic device, and send the advertising to the peer electronic device.

Optionally, in some embodiments of this application, the another electronic device may alternatively listen to an advertising channel to directly obtain the hash value of the public key 1 and the hash value of the MAC 1 that are sent by the peer electronic device to the local electronic device.

S9B04: Send the hash value of the public key 1 and the hash value of the MAC 1.

Similar to step S9B02, the peer electronic device sends the hash value of the public key 1 and the hash value of the MAC 1 to the another electronic device that sends the advertising.

S9B05: Send the hash value of the public key 1 and the hash value of the MAC 1.

After receiving the hash value of the public key 1 and the hash value of the MAC 1, the another electronic device may send the hash value of the public key 1 and the hash value of the MAC 1 to the local electronic device.

S9B06: Store the hash value of the public key 1 and the hash value of the MAC 1.

For specific content, refer to step S9A03 in the foregoing descriptions. Details are not described herein again.

S9B07: Establish a connection.

The local electronic device establishes the connection to the another electronic device.

S9B08: Send a public key 2 and a MAC 2.

After the local electronic device establishes the connection to the another electronic device, the another electronic device sends the public key 2 and the MAC 2 to the local electronic device. The peer electronic device has not sent the public key 1 or the MAC 1 through advertising, and the another electronic device cannot restore the public key 1 from the hash value of the public key 1 and cannot restore the public key 1 from the hash value of the MAC 1. Therefore, the another electronic device cannot send the public key 1 or the MAC 1 to the local electronic device.

S9B09: Determine that the public keys and the MACs do not match, and break the connection.

After receiving the public key 2 and the MAC 2 that are sent by the another electronic device, the local electronic device performs security verification to determine whether the hash value of the public key 1 matches the public key 2 and whether the hash value of the MAC 1 matches the MAC 2. After determining that the public keys and the MACs do not match, the local electronic device breaks the connection to the another electronic device.

It should be noted that, in step S9B02 and step S9B04, the peer electronic device may send the hash value of the public key 1 or the hash value of the MAC 1; in step S9B08, the another electronic device may send the public key 2 or the MAC 2; and in step S9B09, the local electronic device determines that the public keys do not match or the MACs do not match.

With reference to the content shown in FIG. 8, FIG. 9A, and FIG. 9B, it can be understood that the connection between the local electronic device and the peer electronic device may be secure.

Further, optionally, in some embodiments of this application, the local electronic device and the peer electronic device may further exchange a session key, where the session key may be generated by the local electronic device. For example, the following describes a method for exchanging a session key.

FIG. 10 is a diagram of an example in which a local electronic device and a peer electronic device exchange a session key according to an embodiment of this application.

As shown in FIG. 10, a method for exchanging a session key between a local electronic device and a peer electronic device according to an embodiment of this application includes three steps.

S1001: Generate a session key.

The local electronic device may generate the session key after the local electronic device establishes a connection to the peer electronic device. The session key corresponds to a public session key. The public session key may be sent to the peer electronic device through advertising or in another manner.

S1002: Send a session key encrypted by using a public key 1.

The local electronic device sends, to the peer electronic device, the session key encrypted by using the public key 1. For a concept of the public key 1, refer to the foregoing text descriptions of FIG. 8, FIG. 9A, and FIG. 9B. Details are not described herein again. The public key 1 corresponds to a private key 1, and the peer electronic device knows the private key 1.

S1003: Perform decryption by using the private key 1 to obtain the session key.

After receiving the session key encrypted by using the public key 1, the peer electronic device may decrypt the data by using the known private key 1 to obtain the session key.

The session key is used to encrypt, in a subsequent step, data exchanged between the local electronic device and the peer electronic device. For example, the peer electronic device may perform encryption by using the session key when sending information such as a public key of a secondary device, a MAC of the secondary device, and a serial number of the secondary device.

S702: The peer electronic device determines a secondary device according to the first request, and sends, to the local electronic device, information for connecting to the secondary device.

The peer electronic device determines the secondary device according to the first request. For content of the first request, refer to the text descriptions in step S701. Details are not described herein again.

Optionally, in some embodiments of this application, after receiving the first request, the peer electronic device does not respond to the first request if the peer electronic device determines that there is no secondary device corresponding to the first request; or sends an error message to the local electronic device, so that the local electronic device determines that the peer electronic device is not connected to a suitable secondary device. A correspondence between a first request and a secondary device is shown in Table 1.

Table 1 is a schematic table of an example correspondence between a first request and a secondary device according to an embodiment of this application.

**Table 1**

| First message | Secondary device |
|---|---|
| The first message is used to share music. | Headset, television, speaker, or pad |
| The first message is used to share a video. | Television, pad, or screen |
| The first message is used to share a game picture stream. | Television, screen, or VR glasses |
| The first message is used to obtain a keyboard and a mouse, or a stylus. | Keyboard and mouse, or stylus |
| The first message is used to obtain a smart home appliance. | Soybean milk machine or electric rice cooker |

The content described in Table 1 is merely an example for description.

When the peer electronic device is connected to a plurality of secondary devices, or when the peer electronic device was ever connected to a plurality of secondary devices, the peer electronic device may further determine, from the plurality of secondary devices, a secondary device to be shared. For example, the secondary device includes a Bluetooth headset, an electric fan, or a refrigerator. When the first request includes an identifier of a music sharing service or an identifier of the Bluetooth headset, the peer electronic device may determine that the secondary device is the Bluetooth headset. When the first request includes an identifier of the electric fan, the peer electronic device may determine that the secondary device is the electric fan.

After determining the secondary device, the peer electronic device sends, to the local electronic device, the information for connecting to the secondary device.

For example, the information for connecting to the secondary device may include an identifier of a connection between the peer electronic device and the secondary device, a MAC of the secondary device, or a product serial number (Serial Number, SN) of the secondary device.

Optionally, in some embodiments of this application, the peer electronic device may further obtain identification information of the local electronic device, and send the identification information of the local electronic device to the secondary device. The identification information may be any information that can distinguish the local electronic device from another electronic device, for example, an ID of the local electronic device or a MAC of the local electronic device. This is not limited herein.

Optionally, in some embodiments of this application, the first request may be further used to notify the peer electronic device that the secondary device may be disconnected from the peer electronic device after a period of time.

Optionally, in some embodiments of this application, after the peer electronic device receives the first request, the peer electronic device first asks a user to obtain user authorization, and then sends, to the local electronic device, the information for connecting to the secondary device.

Optionally, in some embodiments of this application, after receiving the first request, the peer electronic device further sends a first message to the secondary device, so that the secondary device enters a connectable state, and the secondary device may be connected to the local electronic device.

Optionally, in some embodiments of this application, after the peer electronic device receives the first request, the peer electronic device may alternatively separately send, to the local electronic device and the peer electronic device, information used for mutual verification between the secondary device and the local electronic device. The information used for mutual verification between the secondary device and the local electronic device may separately come from the secondary device and the local electronic device, or may come from the peer electronic device. For example, the information used for mutual verification between the secondary device and the local electronic device may be an identifier of a connection between the peer electronic device and the local electronic device, or may be the identifier of the connection between the peer electronic device and the secondary device. The identifier may be a token (token) or another parameter.

S703: The local electronic device connects to the secondary device of the peer electronic device based on the information for connecting to the secondary device.

After receiving the information for connecting to the secondary device, the local electronic device may connect to the secondary device of the peer electronic device based on the information for connecting to the secondary device.

After the local electronic device is successfully connected to the secondary device, pairing and data exchange may be performed. When the secondary device is an electronic device supporting classic Bluetooth, pairing is completed during connection.

Optionally, in some embodiments of this application, when the peer electronic device is playing audio information, video information, or other information through the secondary device, the peer electronic device may pause the playing after receiving the first request sent by the local electronic device, or the peer electronic device may pause the playing after sending the information for connecting to the secondary device.

Optionally, in some embodiments of this application, after the connection is established, when the secondary device is a smart home appliance, for example, an electric rice cooker, the local electronic device may directly import a recipe or configure settings of the electric rice cooker, for example, a time point for starting cooking and what to cook; or when the secondary device is a stylus or a wireless keyboard and mouse, a user may perform an operation on the local electronic device by using the stylus or the wireless keyboard and mouse.

Optionally, in some embodiments of this application, when the secondary device is an electronic device supporting multi-connectivity and both the local electronic device and the peer electronic device are playing audio information or video information, the secondary device may preferentially play audio or video information of the local electronic device.

Optionally, in some embodiments of this application, when the secondary device obtains the identification information of the local electronic device, the secondary device may verify, based on the identification information of the local electronic device, whether an electronic device that initiates a connection to the secondary device is the local electronic device, to implement a reliable and secure connection. The identification information of the local electronic device may be the MAC of the local electronic device.

For example, with reference to content shown in FIG. 11 to FIG. 13, the following describes an example process of connecting, by a local electronic device, to a secondary device of a peer electronic device.

FIG. 11 is a diagram of an example in which a local electronic device connects to a secondary device according to an embodiment of this application.

As shown in FIG. 11, a method for connecting, by a local electronic device, to a secondary device includes the following steps.

S1101: Send a first request.

The local electronic device sends the first request to a peer electronic device. For a concept of the first request, refer to the foregoing text descriptions in step S701 and step S702. Details are not described herein again.

The local electronic device may send the first request to the peer electronic device through a connection established to the peer electronic device or in another manner.

S1102: Ask a user whether the secondary device can be shared.

Step S1102 is an optional step. To be specific, the peer electronic device may not perform step S1102.

Optionally, in some embodiments of this application, when the local electronic device and the peer electronic device are trusted devices of each other, step S1102 is an optional step. For example, a same account is logged in on the local electronic device and the peer electronic device, or accounts logged in on the local electronic device and the peer electronic device belong to one group, for example, belong to a family group.

The peer electronic device displays, on an interface, a control 4B04 on an interface 4B01 shown in FIG. 4B-1 to ask the user whether the secondary device can be shared.

It should be noted that an interface, on the peer electronic device, for asking the user whether the secondary device can be shared is not limited to content shown on the interface 4B01 in FIG. 4B-1.

If the user does not agree to share the secondary device, the process ends, and the peer electronic device does not perform a subsequent step.

S1103: Send an identifier of the local electronic device.

Step S1103 is an optional step. To be specific, the peer electronic device may not perform step S1103.

When the peer electronic device does not perform step S1103, the secondary device does not perform step S1107.

The peer electronic device sends the identifier of the local electronic device to the secondary device. The identifier of the local electronic device may be a MAC of the local electronic device, or another parameter that can distinguish the local electronic device from another electronic device.

S1104: Send identification information of the secondary device and information used for verification.

The peer electronic device sends, to the local electronic device, the identification information of the secondary device and the information used for connection.

An identifier of the secondary device may be a MAC of the secondary device, or another parameter that can distinguish the secondary device from another electronic device. The MAC may be a random address of the secondary device or a public address of the secondary device.

The information used for verification may include at least one of an identifier of a connection between the secondary device and the peer electronic device, a serial number of the secondary device, and the like.

The identifier of the connection between the secondary device and the peer electronic device may be a token or another parameter.

Optionally, in some embodiments of this application, the peer electronic device may send only the identification information of the secondary device to the local electronic device. In this case, the local electronic device and the secondary device may not perform step S1107 or step S1108, no additional verification is performed on a connection between the local electronic device and the secondary device, and security verification is performed only by checking, by the secondary device, whether the local electronic device matches an identifier of the local electronic device.

S1105: Switch to a connectable state.

Step S1105 is an optional step.

After the secondary device switches to the connectable state, the secondary device may be discovered by the local electronic device and another electronic device.

Optionally, in some embodiments of this application, this step needs to be performed when the secondary device actively switches to the connectable state and the secondary device is a Bluetooth headset.

S1106: Establish a connection based on the identifier of the secondary device.

The local electronic device establishes a connection based on the identifier of the secondary device, where the connection is used to carry data exchanged between the local electronic device and the secondary device.

S1107: Check whether the local electronic device matches the identifier of the local electronic device.

The secondary device checks whether the local electronic device initiating the connection matches the identifier of the local electronic device that is sent by the peer electronic device; and if the local electronic device matches the identifier of the local electronic device, continues to perform a subsequent step; or if the local electronic device does not match the identifier of the local electronic device, interrupts the connection.

S1108: Perform two-way verification or one-way verification based on the information used for connection.

It should be noted that, that the secondary device performs step S1107 may also be considered as verification. In this case, in content corresponding to FIG. 11, the local electronic device and the secondary device perform verification twice.

The local electronic device and the secondary device may perform two-way verification or one-way verification based on the information used for connection. With reference to content shown in FIG. 12, FIG. 13, and FIG. 14, the following describes an example process of verification between the local electronic device and the secondary device.

FIG. 12 is a diagram of an example of verification between a local electronic device and a secondary device according to an embodiment of this application.

As shown in FIG. 12, a method for verification between a local electronic device and a secondary device includes the following steps.

Step S1201: Generate a derived token 1 based on a random number 1 and a token.

The token is an identifier of a connection between the secondary device and a peer electronic device. The random number 1 is a random number generated by the local electronic device. A token on the local electronic device comes from the peer electronic device, and is sent by the peer electronic device to the local electronic device.

Step S1202: Send the random number 1 and the derived token 1.

The local electronic device sends the random number 1 and the derived token 1 to the secondary device.

Step S1203: Generate a derived token 2 based on the random number 1 and the token.

After receiving the random number 1, the secondary device may generate the derived token 2 based on the random number 1 and the token.

Step S1204: Check whether the derived token 2 is the same as the derived token 1.

The secondary device may determine whether the derived token 2 is the same as the derived token 1. If the derived token 2 is the same as the derived token 1, the verification succeeds. If the derived token 2 is different from the derived token 1, the verification fails.

It can be understood that, if the derived token 2 is the same as the derived token 1, the secondary device may determine that the local electronic device is a trusted and correct electronic device.

Step S1205: Generate a derived token 3 based on a random number 2 and the token.

The secondary device may generate the derived token 3 based on the random number 2 and the token. The random number 2 is a random number generated by the secondary device.

Step 1206: Send the random number 2 and the derived token 3.

The secondary device sends the random number 2 and the derived token 3 to the local electronic device.

Step S1207: Generate a derived token 4 based on the random number 2 and the token.

The local electronic device generates the derived token 4 based on the random number 2 and the token.

Step S1208: Check whether the derived token 3 is the same as the derived token 4.

The local electronic device determines whether the derived token 3 is the same as the derived token 4. If the derived token 3 is the same as the derived token 4, the verification succeeds. If the derived token 3 is different from the derived token 4, the verification fails.

It should be noted that step S1201 to step S1204 indicate one-way verification, step S1205 to step S1208 also indicate one-way verification, and step S1201 to step S1208 indicate two-way verification.

Alternatively, verification between the local electronic device and the secondary device may be one-way verification or two-way verification performed based on a public key of the peer electronic device and a public key of the secondary device, and is not limited to the token parameter.

FIG. 13 is a diagram of another example of verification between a local electronic device and a secondary device according to an embodiment of this application.

As shown in FIG. 13, a method for verification between a local electronic device and a secondary device may include the following steps.

S1301: Request to send verification information.

After establishing a connection to the secondary device, the local electronic device may request the secondary device to send a verification message.

S1302: Send a hash value of a public key of the secondary device.

The secondary device may send the hash value of the public key of the secondary device to the local electronic device.

Optionally, in some embodiments of this application, the secondary device may send a hash value of a MAC of the secondary device to the local electronic device.

Optionally, in some embodiments of this application, the secondary device may send a hash value of an operation result of the MAC of the secondary device and the public key of the secondary device to the local electronic device.

Optionally, in some embodiments of this application, the secondary device may send a hash value of a serial number of the secondary device to the local electronic device.

It should be noted that the hash value of the public key may be replaced with a hash value of another parameter, where the parameter needs to be a parameter that can be obtained by the local electronic device from the peer electronic device, and the parameter is a parameter related to the secondary device.

S1303: Verify the hash value of the public key of the secondary device.

After receiving the hash value of the public key that is sent by the secondary device, the local electronic device may verify whether the hash value is correct. The local electronic device may receive the public key of the secondary device from the peer electronic device, and then verify whether the secondary device is a correct secondary device.

Optionally, in some embodiments of this application, corresponding to step S1302, after receiving the hash value of the operation result of the MAC of the secondary device and the public key of the secondary device, the local electronic device may also verify the hash value of the operation result of the MAC of the secondary device and the public key of the secondary device. The local electronic device may obtain the MAC of the secondary device from the peer electronic device.

Optionally, in some embodiments of this application, corresponding to step S1302, after receiving the hash value of the serial number of the secondary device, the local electronic device may also verify the hash value of the serial number of the secondary device. The local electronic device may obtain the serial number of the secondary device from the peer electronic device.

S1304: Request to send verification information.

The secondary device requests the local electronic device to send the verification information.

S1305: Send the public key of the secondary device.

The local electronic device may send the public key of the secondary device to the secondary device.

Optionally, in some embodiments of this application, the electronic device may alternatively send another parameter that can be verified by the secondary device, for example, a MAC of the local electronic device. A parameter verified by the secondary device is a parameter that can be obtained from the peer electronic device or a parameter known by the secondary device.

It should be noted that information sent by the local electronic device to the secondary device for verification cannot be the same as data received in step S1302.

S1306: Verify the public key of the secondary device.

The secondary device verifies whether the public key of the secondary device that is sent by the local electronic device is consistent with a public key of the secondary device, to complete verification.

It should be noted that step S1301 to step S1303 indicate one-way verification, step S1304 to step S1306 also indicate two-way verification, and step S1301 to step S1306 indicate two-way verification.

It should be noted that step S1301 and step S1304 are optional steps. To be specific, a process of verification between the local electronic device and the secondary device may not be triggered by a request, but is automatically triggered after the connection is established.

Alternatively, verification between the local electronic device and the secondary device may be performed based on a public key of the peer electronic device or the public key of the secondary device, as shown in FIG. 14.

FIG. 14 is a diagram of another example of verification between a local electronic device and a secondary device according to an embodiment of this application.

The verification between the local electronic device and the secondary device may include the following steps.

S1401: Send a random number encrypted by using a public key of the secondary device.

The local electronic device generates a random number, encrypts the random number by using the public key of the secondary device, and then sends the random number to the secondary device. The local electronic device obtains the public key of the secondary device from a peer electronic device.

Optionally, in some embodiments of this application, the local electronic device may alternatively encrypt the random number by using a public key of the peer electronic device. The peer electronic device sends the public key of the peer electronic device to the local electronic device, and the peer electronic device sends a private key of the peer electronic device to the secondary device.

S1402: Perform decryption by using a private key of the secondary device to obtain the random number.

The secondary device performs decryption by using the private key of the secondary device to obtain the random number.

Optionally, in some embodiments of this application, the secondary device may alternatively perform decryption by using the private key of the peer electronic device to obtain the random number.

S1403: Send the random number.

The secondary device sends the random number to the local electronic device.

S1404: Verify the random number.

The local electronic device verifies the random number, to be specific, verifies whether a received random number is consistent with the random number in step S1401.

It should be noted that step S1401 to step S1404 indicate one-way verification, and correspondingly, the secondary device may also initiate one-way verification to the local electronic device; or the local electronic device and the secondary device may perform two-way verification.

Optionally, in some embodiments of this application, step S1401 may be triggered by sending a verification request by the secondary device.

S1109: After the verification succeeds, exchange data.

After the verification between the local electronic device and the secondary device succeeds, data may be exchanged through the connection. For example, pairing or transmission of a media file may be started. This is not limited herein.

S704: The secondary device is disconnected from the local electronic device, and the information for connecting to the secondary device is deleted or invalidated.

Step S704 is an optional step.

After a period of time, the secondary device is disconnected from the local electronic device, and the secondary device and/or the local electronic device delete or invalidate the information for connecting to the secondary device.

The period of time may be duration indicated by time information in the first request sent by the peer electronic device. The peer electronic device indicates, based on the time information, duration after which the secondary device is disconnected from the local electronic device.

After the disconnection, the secondary device and/or the local electronic device delete or invalidate the information for connecting to the secondary device.

It can be understood that, after the information for connecting to the secondary device is deleted or invalidated, the secondary device remains in an original state. This further ensures security of the secondary device in a scenario of sharing a media file, or the like.

With reference to content shown in FIG. 15A and FIG. 15B, the following describes an example communication method provided in embodiments of this application.

FIG. 15A is a diagram of an example method process of a communication method according to an embodiment of this application.

As shown in FIG. 15A, the communication method provided in this embodiment of this application may include the following steps.

Step S15A01, step S15A02, step S15A04, step S15A09, step S15A10, step S15A12, and step S15A14 are optional steps.

S15A01: Query for a connectable electronic device through advertising.

A local electronic device queries for a connectable electronic device through advertising.

Optionally, in some embodiments of this application, a peer electronic device may query for the local electronic device through advertising.

S15A02: Reply to the query.

After receiving the query advertised by the local electronic device, the peer electronic device replies to the query, so that the local electronic device can discover the local electronic device.

Optionally, in some embodiments of this application, when the peer electronic device may query for the local electronic device through advertising, the local electronic device replies to the query.

Optionally, in some embodiments of this application, the local electronic device may discover the peer electronic device in another manner. This is not limited herein.

Optionally, in some embodiments of this application, in step S15A01 and/or step S15A02, the local electronic device may determine that a distance between the peer electronic device and the local electronic device is a first distance, determine whether the first distance is less than or equal to a distance threshold, and then determine whether to perform step S15A03.

S15A03: Establish a connection.

The local electronic device establishes a connection to the peer electronic device.

Optionally, in some embodiments of this application, before step S15A03 is performed, when a connection initiator is the local electronic device, the peer electronic device needs to obtain user authorization before establishing a connection to the local electronic device.

S15A04: Perform security verification.

The local electronic device and the peer electronic device perform security verification. The security verification is intended to avoid a malicious misconnection caused by forwarding an advertising message, and exchange a private session key.

For content of performing security verification by the local electronic device and the peer electronic device, refer to step S701, the text descriptions corresponding to FIG. 8, the text descriptions corresponding to FIG. 9A and FIG. 9B, and the text descriptions corresponding to FIG. 10. Details are not described herein again.

S15A05: Send a first request.

The local electronic device sends the first request to the peer electronic device. For content of the first request, refer to the text descriptions in step S702. Details are not described herein again.

S15A06: Obtain user authorization.

The peer electronic device may obtain user authorization in a plurality of manners, for example, by displaying a notification on an interface. For an example interface, refer to content shown on an interface 4B01 in FIG. 4B-1.

S15A07: Send a first message.

The peer electronic device sends the first message to a secondary device, where the first message is used to indicate the secondary device to switch to a connectable state.

The first message may also be referred to as a first instruction.

Optionally, in some embodiments of this application, the first message may further include time information. The time information indicates a time interval after which the secondary device reconnects to the peer electronic device; and/or the time information further indicates the secondary device to delete information that is related to connecting to or performing security verification with the local electronic device, to implement a temporary connection to the local electronic device; and/or the time information may further indicate the secondary device to invalidate a parameter, for example, a key, that was shared with the local electronic device.

S15A08: Enter the connectable state.

The secondary device enters the connectable state.

Optionally, in some embodiments of this application, after the secondary device enters the connectable state, the secondary device is disconnected from the peer electronic device.

S15A09: Send a message for verifying the local electronic device.

The peer electronic device sends, to the local electronic device, a parameter for verifying the local electronic device.

The parameter for verification may include an identifier of the local electronic device, for example, a MAC of the local electronic device.

The parameter for verifying the local electronic device may be related to the connection between the local electronic device and the peer electronic device, or may be an inherent parameter of the local electronic device.

The peer electronic device may obtain, through the connection to the local electronic device, the parameter for verifying the local electronic device.

S15A10: Send information for verifying the secondary device.

The secondary device sends, to the peer electronic device, the information for verifying the secondary device.

The information for verifying the secondary device may be a public key of the secondary device.

S15A11: Send information for connecting to the secondary device.

The peer electronic device sends, to the local electronic device, the information for connecting to the secondary device.

For example, the information for connecting to the secondary device may be a MAC of the secondary device. Because the peer electronic device was ever connected to the secondary device before, the MAC of the secondary device is stored on the peer electronic device.

S15A12: Send information for verifying the secondary device.

The peer electronic device sends, to the local electronic device, the information for verifying the secondary device.

The information for verifying the secondary device may come from step S15A10, for example, the public key of the secondary device. Alternatively, the information for verifying the secondary device may come from information previously exchanged when the peer electronic device is connected to the secondary device, for example, an identifier of the secondary device, the MAC of the secondary device, or a token corresponding to the connection between the peer electronic device and the secondary device.

S15A13: Establish a connection.

The local electronic device establishes a connection to the secondary device.

S15A14: Perform security verification.

The local electronic device and the secondary device perform security verification. For content of the security verification between the local electronic device and the secondary device, refer to the text descriptions corresponding to FIG. 12, the text descriptions corresponding to FIG. 13, and the text descriptions corresponding to FIG. 14. Details are not described herein again.

After the verification succeeds, the local electronic device and the peer electronic device may be paired and then exchange data.

FIG. 15B is a diagram of another example method process of a communication method according to an embodiment of this application.

For step S15B01, step S15B02, step S15B03, and step S15B04, refer to the content in step S15A01, step S15A02, step S15A03, and step S15A04 in FIG. 15A. Details are not described herein again.

S15B05: Send a first request.

The local electronic device sends the first request to the peer electronic device, where the first request is used to share a secondary device connected to the local electronic device.

Optionally, in some embodiments of this application, user authorization further needs to be obtained in a process of performing step S15B05.

S15B06: Send a first message.

For content of the first message, refer to the text descriptions in step S15A07. Details are not described herein again.

S15B07: Enter the connectable state.

For content of the connectable state, refer to the text descriptions in step S15A08. Details are not described herein again.

S15B08: Send information for verifying the peer electronic device.

The local electronic device sends, to the secondary device, the information for verifying the peer electronic device.

The parameter for verification may include an identifier of the peer electronic device, for example, a MAC of the peer electronic device.

The parameter for verifying the peer electronic device may be related to the connection between the local electronic device and the peer electronic device, or may be an inherent parameter of the peer electronic device.

The peer electronic device may obtain, through the connection to the local electronic device, the parameter for verifying the peer electronic device.

S15B09: Send information for verifying the secondary device.

The local electronic device sends, to the peer electronic device, the information for verifying the secondary device.

For example, the information for verifying the secondary device may be a public key of the secondary device.

S15B10: Send information for connecting to the secondary device.

The local electronic device sends, to the peer electronic device, the information for connecting to the secondary device. For example, the information for connecting to the secondary device may be a MAC of the secondary device. Because the local electronic device was ever connected to the secondary device before, the MAC of the secondary device is stored on the local electronic device.

S15B11: Send information for verifying the secondary device.

The local electronic device sends, to the peer electronic device, the information for verifying the secondary device.

The information for verifying the secondary device may come from step S15B09, for example, the public key of the secondary device. Alternatively, the information for verifying the secondary device may come from information previously exchanged when the peer electronic device is connected to the secondary device, for example, an identifier of the secondary device, the MAC of the secondary device, or a token corresponding to the connection between the peer electronic device and the secondary device.

S15B12: Establish a connection.

The peer electronic device establishes a connection to the secondary device.

S15B13: Perform security verification.

The peer electronic device and the secondary device perform security verification. For content of the security verification between the peer electronic device and the secondary device, refer to the text descriptions corresponding to FIG. 12, the text descriptions corresponding to FIG. 13, and the text descriptions corresponding to FIG. 14. Details are not described herein again.

Finally, hardware structures and software architectures of the local electronic device, the peer electronic device, and the secondary device provided in embodiments of this application are described.

FIG. 16 is a diagram of an example hardware structure of a local electronic device, a peer electronic device, and a secondary device according to an embodiment of this application.

The local electronic device, the peer electronic device, or the secondary device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home appliance, and/or a smart city device. A specific type of the electronic device is not particularly limited in this embodiment of this application.

For ease of description, when the local electronic device, the peer electronic device, or the secondary device does not appear, any one of the local electronic device, the peer electronic device, and the secondary device is represented by an electronic device below.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device. In some other embodiments of this application, the electronic device may include more or fewer components than those shown in the figure, some components may be combined, some components may be split, or there may be different component layouts. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction reading and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and analog signal sampling, quantization, and encoding. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini-USB interface, a micro-USB interface, a USB type-C interface, or the like. The USB interface 130 may be configured to connect to a charger to charge the electronic device, or may be configured to transmit data between the electronic device and a peripheral device, or may be configured to connect to a headset for playing audio through the headset. The interface may alternatively be configured to connect to another electronic device like an AR device.

It can be understood that an interface connection relationship between the modules in this embodiment of the present invention is merely an example for description, and does not constitute a limitation on a structure of the electronic device. In some other embodiments of this application, the electronic device may alternatively use an interface connection mode different from that in the foregoing embodiment, or use a combination of a plurality of interface connection modes.

The charging management module 140 is configured to receive charging input from a charger. The charger may be a wireless charger or a wired charger. In some embodiments in which wired charging is used, the charging management module 140 may receive charging input from a wired charger through the USB interface 130. In some embodiments in which wireless charging is used, the charging management module 140 may receive wireless charging input through a wireless charging coil of the electronic device. The charging management module 140 may further supply power to the electronic device through the power management module 141 while charging the battery 142.

The power management module 141 is connected to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution applied to the electronic device for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium- or highfrequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution applied to the electronic device for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more devices integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform on frequency energy.

The video codec is configured to compress or decompress a digital video. The electronic device may support one or more types of video codecs. In this way, the electronic device may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device, for example, image recognition, facial recognition, speech recognition, and text understanding, may be implemented through the NPU.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM is usually referred to as a DDR5 SDRAM), and the like. The non-volatile memory may include a magnetic disk storage device and a flash memory (flash memory).

The flash memory may include a NOR flash, a NAND flash, a 3D NAND flash, and the like through division according to an operation principle; may include a single-level cell (single-level cell, SLC), a multi-level cell (multi-level cell, MLC), a triple-level cell (triple-level cell, TLC), a quad-level cell (quad-level cell, QLC), and the like through division based on a potential order of a storage unit; may include a universal flash storage (English: universal flash storage, UFS), an embedded multimedia card (embedded multimedia card, eMMC), and the like through division based on storage specifications; and so on.

The processor 110 may directly perform a read or write operation on the random access memory. The random access memory may be configured to store an operating system or an executable program (for example, machine instructions) of another running program, and may be further configured to store data of a user and an application program, and the like.

The non-volatile memory may also store an executable program, data of a user and an application program, and the like, and may be loaded to the random access memory in advance, so that the processor 110 directly performs a read or write operation.

The external memory interface 120 may be connected to an external non-volatile memory, to extend a storage capability of the electronic device. The external non-volatile memory communicates with the processor 110 through the external memory interface 120, to implement a data storage function. For example, files such as music and videos are stored in the external non-volatile memory.

The electronic device may implement an audio function, for example, music play and recording, through the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device may listen to music or answer a hands-free call through the speaker 170A.

The receiver 170B, also referred to as an "earpiece", is configured to convert an electrical audio signal into a sound signal. When a call is answered or audio information is listened to by using the electronic device, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to capture a sound signal and further implement a noise reduction function. In some other embodiments, three, four, or more microphones 170C may alternatively be disposed in the electronic device, to capture a sound signal, implement noise reduction, and recognize a sound source, to implement a directional recording function and the like.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines pressure intensity based on a capacitance change. When a touch operation is performed on the display 194, the electronic device detects intensity of the touch operation based on the pressure sensor 180A. The electronic device may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyroscope sensor 180B may be configured to determine a motion attitude of the electronic device. In some embodiments, an angular velocity of the electronic device around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device jitters, calculates, based on the angle, a distance for which a lens module needs to compensate, and allows the lens to cancel the jitter of the electronic device through reverse motion, to implement image stabilization. The gyroscope sensor 180B may be further used in a navigation scenario and a somatic game scenario.

The barometric pressure sensor 180C is configured to measure barometric pressure. In some embodiments, the electronic device calculates an altitude based on a value of the barometric pressure measured by the barometric pressure sensor 180C, to assist in positioning and navigation.

The magnetic sensor 180D includes a Hall effect sensor. The electronic device may detect opening and closing of a flip leather case by using the magnetic sensor 180D. In some embodiments, when the electronic device is a clamshell phone, the electronic device may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device, may detect a magnitude and a direction of gravity when the electronic device is still, and may be further configured to recognize an attitude of the electronic device and used in applications such as landscape/portrait mode switching and a pedometer.

The distance sensor 180F is configured to measure a distance. The electronic device may measure a distance by using infrared or laser. In some embodiments, in a photographing scenario, the electronic device may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device emits infrared light by using the light-emitting diode. The electronic device detects infrared reflected light from a nearby object by using the photodiode. When sufficient reflected light is detected, it may be determined that there is an object near the electronic device. When insufficient reflected light is detected, the electronic device may determine that there is no object near the electronic device. The electronic device may detect, by using the optical proximity sensor 180G, that a user holds the electronic device close to an ear for a call, to automatically turn off a screen for power saving. The optical proximity sensor 180G may also be used in a smart cover mode or a pocket mode for automatic screen unlocking or locking.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device is in a pocket, to avoid an accidental touch.

The fingerprint sensor 180H is configured to capture a fingerprint. The electronic device may use a feature of the captured fingerprint to implement fingerprint-based unlocking, application lock access, fingerprint-based photographing, fingerprint-based call answering, and the like.

The temperature sensor 180J is configured to detect temperature. In some embodiments, the electronic device executes a temperature processing policy by using the temperature detected by the temperature sensor 180J. For example, when the temperature reported by the temperature sensor 180J exceeds a threshold, the electronic device degrades performance of a processor near the temperature sensor 180J, to reduce power consumption and implement thermal protection. In some other embodiments, when the temperature is lower than another threshold, the electronic device heats the battery 142 to avoid abnormal shutdown of the electronic device that is caused due to low temperature. In some other embodiments, when the temperature is less than still another threshold, the electronic device boosts an output voltage of the battery 142 to avoid abnormal shutdown due to low temperature.

The touch sensor 180K is also referred to as a "touch device". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. Visual output related to the touch operation may be provided by using the display 194. In some other embodiments, the touch sensor 180K may alternatively be disposed on a surface of the electronic device at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal, obtained by the bone conduction sensor 180M, of the vibration bone of the vocal-cord part, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device may receive key input, and generate key signal input related to user settings and function control of the electronic device.

The motor 191 may generate a vibration prompt. The motor 191 may be configured to provide an incoming call vibration prompt or a touch vibration feedback. For example, touch operations performed on different applications (for example, photographing and audio play) may correspond to different vibration feedback effect. The motor 191 may also correspond to different vibration feedback effect for touch operations performed on different regions of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be inserted in a same SIM card interface 195 at the same time. The plurality of cards may belong to a same type or different types. The SIM card interface 195 is also compatible with different types of SIM cards. The SIM card interface 195 is also compatible with an external storage card. The electronic device interacts with a network through the SIM card, to implement functions such as calling and data communication. In some embodiments, the electronic device uses an eSIM, namely, an embedded SIM card. The eSIM card may be embedded into the electronic device, and cannot be separated from the electronic device.

In some embodiments of this application, the local electronic device may be connected to the peer electronic device through the wireless communication module 160, and the local electronic device may be connected to the secondary device through the wireless communication module 160.

FIG. 17A is a diagram of an example software architecture of an electronic device according to an embodiment of this application.

A software system of the electronic device may use a hierarchical architecture, an event-driven architecture, a microkernel architecture, a micro service architecture, or a cloud architecture. In embodiments of the present invention, an Android system with a hierarchical architecture is used as an example to illustrate a software structure of the electronic device.

In a hierarchical architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 17A, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 17A, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is displayed in the status bar, a prompt tone is played, the electronic device vibrates, or an indicator blinks.

The Android runtime includes a kernel library and a virtual machine. The Android runtime schedules and manages the Android system.

The kernel library includes two parts: a function that needs to be called in Java language and a kernel library of Android.

The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports play and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and a Bluetooth driver.

A Bluetooth connection may be performed between a local electronic device and a peer electronic device through a Bluetooth driver. Correspondingly, a Bluetooth connection may be performed between the local electronic device and a secondary device through a Bluetooth driver.

FIG. 17B is a diagram of another example software architecture of an electronic device according to an embodiment of this application.

As shown in FIG. 17B, the software architecture of the electronic device includes a media play module, a device connection management module, and a Bluetooth hardware abstraction layer.

The media play module may be configured to play a media file.

The device connection management module includes a device discovery module and a device connection module. The device discovery module is configured to discover another surrounding electronic device. The device connection module is configured to connect to the discovered electronic device and perform security verification.

The Bluetooth hardware abstraction layer is used by the device connection management module to invoke Bluetooth hardware, to perform a Bluetooth connection to another electronic device.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by software, hardware, firmware, or any combination thereof. When the functions are implemented by software, all or some of the functions may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art can understand that all or some of the processes of the methods in the foregoing embodiments may be implemented by a computer program instructing related hardware. The program may be stored in a computer-readable storage medium. When the program is executed, the processes of the method embodiments may be performed. The foregoing storage medium includes any medium that can store program code, such as a ROM, a random access memory RAM, a magnetic disk, or an optical disc.

## Claims

1. A communication method, applied to a communication system comprising a first electronic device and a second electronic device, wherein the method comprises:
connecting, by the second electronic device, to a secondary device, and when the second electronic device determines to establish a connection between the first electronic device and the secondary device, sending, by the second electronic device, a first message to the first electronic device, and sending, by the second electronic device, a first indication to the secondary device, wherein the first indication is used to indicate the secondary device to enter a connectable state, the first message is used to indicate the first electronic device to connect to the secondary device, and the first message comprises information for connecting to the secondary device; and
connecting, by the first electronic device, to the secondary device based on the first message.

2. The method according to claim 1, wherein the method further comprises:
responding to that an operation performed by a user on the second electronic device is received, determining, by the second electronic device, to establish a connection between the first electronic device and the secondary device.

3. The method according to claim 2, wherein after the responding to that an operation performed by a user on the second electronic device is received, the method further comprises:
sending, by the second electronic device, a first request to the first electronic device, wherein the first request is used to share the secondary device to the first electronic device; and sending, by the first electronic device, an acknowledgement message to the second electronic device after the first electronic device receives the first request; and
after the second electronic device receives the acknowledgement message, determining, by the second electronic device, to establish a connection between the first electronic device and the secondary device.

4. The method according to claim 1, wherein the method further comprises:
sending, by the first electronic device, a second request to the second electronic device;
after the second electronic device receives the second request, determining, by the second electronic device, the secondary device according to the second request; and
after the second electronic device determines the secondary device, determining, by the second electronic device, to establish a connection between the first electronic device and the secondary device.

5. The method according to claim 4, wherein the second request comprises a type of the secondary device and/or that the second request is used to share first data, and after the connecting, by the first electronic device, to the secondary device based on the first message, the method further comprises: using, by the first electronic device, the secondary device as an input device or an output device.

6. The method according to claim 4 or 5, wherein the second request is used to share the first data, and the determining, by the second electronic device, the secondary device according to the second request specifically comprises: determining, by the second electronic device, the secondary device after the second electronic device determines, based on the first data, that the secondary device is to process the first data; and
after the using, by the first electronic device, the secondary device as an input device or an output device, the method further comprises: sending, by the first electronic device, the first data to the secondary device.

7. The method according to any one of claims 4 to 6, wherein before the sending, by the first electronic device, a second request to the second electronic device, the method further comprises:
displaying, by the first electronic device, a first interface, wherein the first interface comprises a first control;
displaying, by the first electronic device, a first window after receiving an operation performed by a user on the first control, wherein the first window comprises a second control, and the second control corresponds to the second electronic device; and
the sending, by the first electronic device, a second request to the second electronic device specifically comprises: sending, by the first electronic device, the second request to the second electronic device after receiving an operation performed by the user on the second control.

8. The method according to claim 7, wherein
the first interface is an interface of a first application, the first application is an application for playing a multimedia file, the first interface further comprises a third control, and the third control is used to indicate the first electronic device to play the multimedia file; and
after the connecting, by the first electronic device, to the secondary device based on the first message, the method further comprises: playing, by the first electronic device, a picture and/or audio of the multimedia file through the secondary device after receiving an operation performed by the user on the third control.

9. The method according to any one of claims 4 to 8, wherein
before the sending, by the first electronic device, a second request to the second electronic device, the method further comprises: determining, by the first electronic device, a first distance, wherein the first distance is a distance between the first electronic device and the second electronic device; and establishing, by the first electronic device, a connection to the second electronic device after the first electronic device determines that the first distance is less than a distance threshold;
the sending, by the first electronic device, a second request to the second electronic device specifically comprises: sending, by the first electronic device, the second request to the second electronic device through the connection; and
the sending, by the second electronic device, a first message to the first electronic device specifically comprises: sending, by the second electronic device, the first message to the first electronic device through the connection.

10. The method according to claim 9, wherein the determining, by the first electronic device, a first distance specifically comprises:
sending, by the second electronic device, a first advertising message; and
determining, by the first electronic device, the first distance based on the first advertising message after receiving the first advertising message.

11. The method according to claim 9, wherein the determining, by the first electronic device, a first distance specifically comprises:
sending, by the first electronic device, a first advertising message;
sending, by the second electronic device, a first response after receiving the first advertising message and determining a first distance based on the first advertising message, wherein the first response comprises the first distance; and
determining, by the first electronic device, the first distance based on the first response after receiving the first response.

12. The method according to any one of claims 9 to 11, wherein
before the establishing, by the first electronic device, a connection to the second electronic device, the method further comprises: sending, by the second electronic device, a first verification parameter through advertising, wherein the first verification parameter is a hash value of a first parameter, the first parameter is a first MAC and/or a first public key, the first public key is a public key of the second electronic device, and the first MAC is an address of the second electronic device; and
after the establishing, by the first electronic device, a connection to the second electronic device, the method further comprises:
sending, by the second electronic device, the first parameter through the connection; and
determining, by the first electronic device based on the first parameter and the first verification parameter, whether to break the connection.

13. The method according to any one of claims 4 to 12, wherein after the second electronic device receives the second request, and before the sending, by the second electronic device, a first message to the first electronic device, the method further comprises:
sending, by the second electronic device, a third message to the secondary device, wherein the third message is used to verify whether an electronic device connected to the secondary device is the first electronic device, the third message comprises a second MAC, and the second MAC is an address of the first electronic device; and
after the connecting, by the first electronic device, to the secondary device, the method further comprises:
determining, by the secondary device based on the third message, that the electronic device connected to the secondary device is the first electronic device.

14. The method according to any one of claims 1 to 12, wherein after the second electronic device receives the second request, and before the sending, by the second electronic device, a first indication to the secondary device, the method further comprises:
displaying, by the second electronic device, a second interface, wherein the second interface comprises a second window and a fourth control, the second window is used to display authorization prompt information, the authorization prompt information is used to prompt the user whether to authorize the first electronic device to establish a connection to the second secondary device, and the fourth control is used to obtain user authorization; and
the sending, by the second electronic device, a first indication to the second secondary device specifically comprises: sending, by the second electronic device, the first indication to the second secondary device after receiving an operation performed by the user on the fourth control.

15. The method according to any one of claims 1 to 12, wherein after the sending, by the second electronic device, a first indication to the secondary device, and before the connecting, by the first electronic device, to the secondary device based on the first message, the method further comprises:
sending, by the second electronic device, a fourth message to the first electronic device, wherein the fourth message is used to determine whether an electronic device connected based on the first message is the secondary device, and the fourth message comprises one or more of a public key of the secondary device, identification information of the secondary device, and an identifier of a connection between the secondary device and the second electronic device; and
after the connecting, by the first electronic device, to the secondary device based on the first message, the method further comprises:
determining, by the first electronic device based on the fourth message, that an electronic device connected to the first electronic device is the secondary device.

16. The method according to any one of claims 4 to 12, wherein
the second request or the first message comprises first duration; and
after the connecting, by the first electronic device, to the secondary device, the method further comprises:
after the first electronic device is connected to the secondary device for the first duration, breaking, by the first electronic device, the connection between the first electronic device and the secondary device.

17. The method according to claim 16, wherein after the first electronic device is connected to the secondary device for the first duration, the method further comprises:
invalidating or deleting, by the first electronic device, the information for connecting to the secondary device.

18. The method according to claim 16, wherein the first request is used to share first data, the first data is a multimedia file, and the first duration is related to play duration of the multimedia file.

19. The method according to claims 1 to 18, wherein an electronic device in a connectable state is capable of being connected and being paired.

20. A communication method, applied to a first electronic device, wherein the method comprises:
receiving, by the first electronic device, a first message sent by a second electronic device, wherein the first message is used to connect to a secondary device, the first message comprises information for connecting to the secondary device, the secondary device is connected to the second electronic device before the first electronic device receives the first message, and the secondary device is in a connectable state after the first electronic device receives the first message; and
connecting, by the first electronic device, to the secondary device based on the first message.

21. The method according to claim 20, wherein before the receiving, by the first electronic device, a first message sent by a second electronic device, the method further comprises:
receiving, by the first electronic device, a first request sent by the second electronic device, wherein the first request is used to share the secondary device to the first electronic device; and
sending, by the first electronic device, an acknowledgement message to the second electronic device, wherein the acknowledgement message is used to indicate the second electronic device to determine to establish a connection between the first electronic device and the secondary device.

22. The method according to claim 20, wherein before the receiving, by the first electronic device, a first message sent by a second electronic device, the method further comprises:
sending, by the first electronic device, a second request to the second electronic device, wherein the second request is used to indicate the second electronic device to determine to establish a connection between the first electronic device and the secondary device.

23. The method according to claim 22, wherein before the sending, by the first electronic device, a first request to the second electronic device, the method further comprises:
displaying, by the first electronic device, a first interface, wherein the first interface comprises a first control; and
displaying, by the first electronic device, a first window after receiving an operation performed by a user on the first control, wherein the first window comprises a second control, and the second control corresponds to the second electronic device; and
the sending, by the first electronic device, a first request to the second electronic device specifically comprises: sending, by the first electronic device, the second request to the second electronic device after receiving an operation performed by the user on the second control.

24. The method according to claim 23, wherein the second request comprises a type of the secondary device and/or that the second request is used to share first data, and after the connecting, by the first electronic device, to the secondary device based on the first message, the method further comprises: using, by the first electronic device, the secondary device as an input device or an output device; and
when the second request is used to share the first data, sending, by the first electronic device, the first data to the secondary device after the first electronic device uses the secondary device as an input device or an output device.

25. The method according to claim 24, wherein
the first interface is an interface of a first application, the first application is an application for playing a multimedia file, the first data is a multimedia file, the first interface further comprises a third control, and the third control is used to play the first data; and
after the connecting, by the first electronic device, to the secondary device, the method further comprises: playing, by the first electronic device, a picture and/or audio of the multimedia file through the secondary device after receiving an operation performed by the user on the third control.

26. The method according to any one of claims 22 to 25, wherein
before the sending, by the first electronic device, a second request to the second electronic device, the method further comprises: determining, by the first electronic device, a first distance, wherein the first distance is a distance between the first electronic device and the second electronic device; and establishing, by the first electronic device, a connection to the second electronic device after the first electronic device determines that the first distance is less than a distance threshold;
the sending, by the first electronic device, a second request to the second electronic device specifically comprises: sending, by the first electronic device, the second request to the second electronic device through the connection; and
the receiving, by the first electronic device, a first message sent by a second electronic device specifically comprises: receiving, by the first electronic device through the connection, the first message sent by the second electronic device.

27. The method according to claim 26, wherein the determining, by the first electronic device, a first distance specifically comprises:
receiving, by the first electronic device, a first advertising message sent by the second electronic device, and determining the first distance based on the first advertising message; or
sending, by the first electronic device, a first advertising message, and receiving a first response sent by the second electronic device, wherein the first response comprises a first distance, and the first distance is determined by the second electronic device based on the first advertising message.

28. The method according to claim 26 or 27, wherein
before the establishing, by the first electronic device, a connection to the second electronic device, the method further comprises: sending, by the second electronic device, a first verification parameter through advertising, wherein the first verification parameter is a hash value of a first parameter, the first parameter is a first MAC and/or a first public key, the first public key is a public key of the second electronic device, and the first MAC is an address of the second electronic device; and
after the establishing, by the first electronic device, a connection to the second electronic device, the method further comprises:
receiving, by the first electronic device, the first parameter through the connection; and
determining, by the first electronic device based on the first parameter and the first verification parameter, whether to break the connection.

29. The method according to any one of claims 22 to 28, wherein before the connecting, by the first electronic device, to the secondary device based on the first message, the method further comprises:
receiving, by the first electronic device, a second message sent by the second electronic device, wherein the second message is used to determine whether an electronic device connected based on the first message is the secondary device, and the second message comprises one or more of a public key of the secondary device, identification information of the secondary device, and an identifier of a connection between the secondary device and the second electronic device; and
after the connecting, by the first electronic device, to the secondary device based on the first message, the method further comprises:
determining, by the first electronic device based on the second message, that an electronic device connected to the first electronic device is the secondary device.

30. A communication method, applied to a second electronic device, wherein the method comprises:
connecting, by the second electronic device, to a secondary device, and when the second electronic device determines to establish a connection between a first electronic device and the secondary device, sending, by the second electronic device, a first message to the first electronic device, and sending, by the second electronic device, a first indication to the secondary device, wherein the first indication is used to indicate the secondary device to enter a connectable state, the first message is used to indicate the first electronic device to connect to the secondary device, and the first message comprises information for connecting to the secondary device.

31. The method according to claim 30, wherein the method further comprises:
responding to that an operation performed by a user on the second electronic device is received, determining, by the second electronic device, to establish a connection between the first electronic device and the secondary device.

32. The method according to claim 31, wherein after the responding to that an operation performed by a user on the second electronic device is received, the method further comprises:
sending, by the second electronic device, a first request to the first electronic device, wherein the first request is used to share the secondary device to the first electronic device; and
after the second electronic device receives an acknowledgement message sent by the first electronic device, determining, by the second electronic device, to establish a connection between the first electronic device and the secondary device.

33. The method according to claim 30, wherein the method further comprises:
after the second electronic device receives a second request, determining, by the second electronic device, the secondary device according to the second request; and
after the second electronic device determines the secondary device, determining, by the second electronic device, to establish a connection between the first electronic device and the secondary device.

34. The method according to claim 33, wherein the method further comprises:
the second request comprises a type of the secondary device and/or that the second request is used to share first data, and the determining, by the second electronic device, the secondary device according to the second request specifically comprises: determining, by the second electronic device, the secondary device based on the type of the secondary device and the first data.

35. A communication method, applied to a secondary device, wherein the method comprises:
connecting, by the secondary device, to a second electronic device, and receiving, by the secondary device through a connection between the secondary device and the second electronic device, a first indication sent by the second electronic device, wherein the first indication is used to indicate the secondary device to change to a connectable state;
changing, by the secondary device, to the connectable state based on the first indication; and
after the secondary device changes to the connectable state, in response to that a connection request sent by a first electronic device is received, establishing, by the secondary device, a connection to the first electronic device.

36. The method according to claim 35, wherein before the establishing, by the secondary device, a connection to the first electronic device, the method further comprises:
receiving, by the secondary device through the connection between the second electronic device and the secondary device, a first message sent by the second electronic device, wherein the first message is used to verify whether an electronic device connected to the secondary device is the first electronic device; and
after the establishing, by the secondary device, a connection to the first electronic device, the method further comprises:
determining, by the secondary device based on the first message, that the electronic device connected to the secondary device is the first electronic device.

37. An electronic device, wherein the electronic device comprises one or more processors and a memory, the memory is coupled to the one or more processors, the memory is configured to store computer program code, the computer program code comprises computer instructions, and the one or more processors invoke the computer instructions to enable the electronic device to perform the method according to any one of claims 20 to 36.

38. A chip system, wherein the chip system is used in an electronic device, the chip system comprises one or more processors, and the processor is configured to invoke computer instructions to enable the electronic device to perform the method according to any one of claims 20 to 36.

39. A computer-readable storage medium, comprising instructions, wherein when the instructions are run on an electronic device, the electronic device is enabled to perform the method according to any one of claims 20 to 36.

40. A computer program product comprising instructions, wherein when the computer program product is run on an electronic device, the electronic device is enabled to perform the method according to any one of claims 20 to 36.
